# EUROPEAN PATENT APPLICATION

(11) **EP 4 571 475 A1**
(43) Date of publication of application: **18.06.2025**
(21) Application number: 24736296.5
(22) Date of filing: 02.07.2024
(51) Int. Cl.: G06F 3/0484, G06F 3/0481, G06F 9/451, G06F 3/06

(54) **ELECTRONIC DEVICE FOR MANAGING DELETED INFORMATION ON BASIS OF EXECUTION OF SOFTWARE APPLICATIONS, AND METHOD THEREFOR**

(30) Priority: 13.10.2023 KR 20230136844; 28.11.2023 KR 20230168690
(71) Applicant: Samsung Electronics Co., Ltd, Suwon-si, Gyeonggi-do 16677 (KR)
(72) Inventor: JEONG, Hyojeong, Suwon-si, Gyeonggi-do 16677 (KR); YOON, Kwanghyeok, Suwon-si, Gyeonggi-do 16677 (KR); CHOI, Hyoungho, Suwon-si, Gyeonggi-do 16677 (KR); HAN, Wonjeong, Suwon-si, Gyeonggi-do 16677 (KR); LEE, Junghee, Suwon-si, Gyeonggi-do 16677 (KR); JEONG, Junwook, Suwon-si, Gyeonggi-do 16677 (KR)
(74) Representative: HGF
(86) International application number: PCT/KR2024/009309
(87) International publication number: WO 2025/079814

(57) **Abstract**

According to an embodiment, an electronic device displays a first execution screen, which is configured to receive a user input for accessing a first trash directory of the first software application, based on execution of a first software application. The electronic device display a second execution screen, which is configured to receive a user input for accessing a second trash directory, based on execution of a second software application. The electronic device is configured to identify, by using the second database including information with respect to files classified as included in the first trash directory and the second trash directory, at least one file that is included in the second trash directory and is associated with a category accessible by the first software application, based on receiving the user input to access the first trash directory, via the first execution screen. The electronic device is configured to display at least one visual object corresponding to the identified at least one file, via the first execution screen.

## Description

### [Technical Field]

The present disclosure relates to an electronic device for managing deleted information (e.g., file and/or directory) based on execution of software applications and a method thereof.

### [Background Art]

Software applications for supporting various functions may be installed in an electronic device. The software applications may include, for example, a camera application for controlling one or more cameras included in the electronic device, a recording application for controlling a microphone included in the electronic device, a messenger application (or call application) for transmitting or receiving text, image, video and/or audio based on communication of a network, and/or a file management application for managing one or more files and/or directories stored in the electronic device. When executing one or more of the different software applications, the electronic device may receive a user input for generating, changing, or deleting files and/or directories of one or more of the executed software applications.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to an embodiment, an electronic device may comprise a display, a processor, and memory storing instructions. The instructions, when executed by the processor, cause the electronic device to display within the display a first execution screen based on execution of a first software application. The first execution screen may be configured to receive a user input for accessing a first trash directory of the first software application. The instructions, when executed by the processor, cause the electronic device to display a second execution screen based on execution of a second software application. The second execution screen may be configured to receive a user input for accessing a second trash directory of the second software application. The instructions, when executed by the processor, cause the electronic device to execute a first managing application configured to manage a first database, which records states of files stored in the memory according to operations performed by the first software application and the second software application, and includes files associated with a list, which are classified as included in the first trash directory and the second trash directory. The instructions, when executed by the processor, cause the electronic device to execute a second managing application configured to manage a second database, which is updated by using a list that is obtained from the first database. The instructions, when executed by the processor, cause the electronic device to, identify, by using the second database including information with respect to files classified as included in the first trash directory and the second trash directory, at least one file that is included in the second trash directory and is associated with a category accessible by the first software application, based on receiving, via the first execution screen, the user input for accessing the first trash directory. The instructions, when executed by the processor, cause the electronic device to display, via the first execution screen of the first software application, at least one visual object corresponding to the identified at least one file.

In an embodiment, a method of an electronic device comprising a display, memory and a processor is provided. The method may comprise displaying within the display a first execution screen based on execution of a first software application. The first execution screen may be configured to receive a user input for accessing a first trash directory of the first software application. The method may comprise displaying a second execution screen based on execution of a second software application. The second execution screen may be configured to receive a user input for accessing a second trash directory of the second software application. The method may comprise executing a first managing application configured to manage a first database, which records states of files stored in the memory according to operations performed by the first software application and the second software application, and includes files associated with a list, which are classified as included in the first trash directory and the second trash directory. The method may comprise executing a second managing application configured to manage a second database, which is updated by using a list that is obtained from the first database. The displaying the first execution screen may comprise, based on receiving the user input for accessing the first trash directory, identifying, by using the second database including information with respect to files classified as included in the first trash directory and the second trash directory, at least one file that is included in the second trash directory and is associated with a category accessible by the first software application. The displaying the first execution screen may comprise displaying, via the first execution screen of the first software application, at least one visual object corresponding to the identified at least one file.

In an embodiment, a non-transitory computer readable storage medium including instructions is provided. The instructions may be configured to, when executed by an electronic device comprising a display, memory and a processor, cause the electronic device to display within the display a first execution screen based on execution of a first software application. The first execution screen may be configured to receive a user input for accessing a first trash directory of the first software application. The instructions may be configured to, when executed by the electronic device, cause the electronic device to display a second execution screen based on execution of a second software application. The second execution screen may be configured to receive a user input for accessing a second trash directory of the second software application. The instructions may be configured to, when executed by the electronic device, cause the electronic device to execute a first managing application configured to manage a first database, which records states of files stored in the memory according to operations performed by the first software application and the second software application, and includes files associated with a list, which are classified as included in the first trash directory and the second trash directory. The instructions may be configured to, when executed by the electronic device, cause the electronic device to execute a second managing application configured to manage a second database, which is updated by using a list that is obtained from the first database. The instructions may be configured to, when executed by the electronic device, cause the electronic device to, based on receiving, via the first execution screen, the user input for accessing the first trash directory, identify, by using the second database including information with respect to files classified as included in the first trash directory and the second trash directory, at least one file that is included in the second trash directory and is associated with a category accessible by the first software application. The instructions may be configured to, when executed by the electronic device, cause the electronic device to display, via the first execution screen of the first software application, at least one visual object corresponding to the identified at least one file.

According to an embodiment, an electronic device may comprise a display, memory storing instructions of a plurality of software applications including a first software application and a second software application, and a processor. The instructions, when executed by the processor, may cause the electronic device to receive an input for accessing a first trash directory of the first software application through an execution screen of the first software application. The instructions, when executed by the processor, may cause the electronic device to, in response to the input, identify at least one file, which is included in a category accessible by the first software application and is included in a second trash directory different from the first trash directory, by executing a second software application that manages a first database including information on files classified into any one of trash directories of the plurality of software applications. The instructions, when executed by the processor, may cause the electronic device to display at least one visual object corresponding to the identified at least one file, within the execution screen. The first database may store files classified into the trash directories of the plurality of software applications, and may be updated using a list obtained from a second database storing states of files in the memory that are added or changed by the plurality of software applications.

In an embodiment, an electronic device comprise a display, memory, and a processor. The method may comprise receiving an input for accessing a first trash directory of a first software application through an execution screen of the first software application. The method may comprise, in response to the input, identifying at least one file, which is included in a category accessible by the first software application and is included in a second trash directory different from the first trash directory, by executing a second software application that manages a first database including information on files classified into any one of trash directories of a plurality of software applications including the first software application. The method may comprise displaying at least one visual object corresponding to the identified at least one file, within the execution screen. The first database may store files classified into the trash directories of the plurality of software applications, and may be updated using a list obtained from a second database storing states of files in the memory that are added or changed by the plurality of software applications.

In an embodiment, a non-transitory computer readable storage medium including instructions is provided. The instructions, when executed by an electronic device comprising a display, memory and a processor, may cause the electronic device to receive an input for accessing a first trash directory of a first software application through an execution screen of the first software application. The instructions, when executed by the electronic device, may cause the electronic device to, in response to the input, identify at least one file, which is included in a category accessible by the first software application and is included in a second trash directory different from the first trash directory, by executing a second software application that manages a first database including information on files classified into any one of trash directories of the plurality of software applications. The instructions, when executed by the electronic device, may cause the electronic device to display at least one visual object corresponding to the identified at least one file, within the execution screen. The first database may store files classified into the trash directories of the plurality of software applications, and may be updated using a list obtained from a second database storing states of files in the memory that are added or changed by the plurality of software applications.

According to an embodiment, an electronic device may comprise a display, memory storing instructions of a plurality of software applications, and a processor. The processor may be configured to, when the instructions are executed, cause the electronic device to display a first screen based on execution of a first software application among the plurality of software applications on the display. The processor may be configured to, when the instructions are executed, cause the electronic device to receive a user input for browsing information indicated as deleted within the memory, based on the first screen. The processor may be configured to, when the instructions are executed, cause the electronic device to, in response to the user input, obtain the information including a file indicated as deleted based on a third software application different from the first software application, by using a second database managed by a second software application and synchronized with a first database accessible by the plurality of software applications. The processor may be configured to, when the instructions are executed, cause the electronic device to display, on the display, a second screen including a visual object corresponding to the file indicated as deleted based on the third software application, based on the information.

In an embodiment, a method of an electronic device including a display, memory, and a processor is provided. The method may comprise displaying a first screen based on execution of a first software application among a plurality of software applications, which are stored in the memory, on the display. The method may comprise, based on the first screen, receiving a user input for browsing information indicated as deleted within the memory. The method may comprise, in response to the user input, obtaining the information including a file indicated as deleted based on a third software application different from the first software application, by using a second database managed by a second software application and synchronized with a first database accessible by the plurality of software applications. The method may comprise, based on the information, displaying, on the display, a second screen including a visual object corresponding to the file indicated as deleted based on the third software application.

In an embodiment, a non-transitory computer readable storage medium including instructions is provided. The instructions may be configured to, when executed by an electronic device comprising a display, memory and a processor, cause the electronic device to, while displaying a first screen based on execution of a first software application among a plurality of software applications, which are stored in the memory, on the display, identify a user input for browsing information indicated as deleted within the memory. The instructions may be configured to, when executed by the electronic device, cause the electronic device to, in response to the user input, obtain the information including a file indicated as deleted based on a third software application different from the first software application, by using a second database managed by a second software application corresponding to the instructions and synchronized with a first database accessible by the plurality of software applications. The instructions may be configured to, when executed by the electronic device, cause the electronic device to provide the information to the first software application, in order to display a second screen including a visual object corresponding to the file indicated as deleted based on the third software application.

Electronic devices are typically able to run many different types of software applications. Within each software application, a user may delete one or more stored files. For example, in a software application for viewing images taken by a camera, a user may delete one or more stored images. In a different software application for viewing and editing documents, a user may delete one or more documents. The deleted documents for the different software applications enter respective recycle bins. That is, the image files deleted from the imaging application are stored in a first recycle bin associated with the imaging application, whereas the document files deleted from the document application are stored in a second recycle bin, different to the first recycle bin, associated with the document application. When a user wants to manage the deleted files, it is necessary for the user to execute each software application to access their respective recycle bins. It is difficult for a user to access and manage their deleted documents, which can make it difficult for a user to manage the storage of the electronic device. For example, a user may not remember from which application a particular file was deleted, so it can be burdensome for a user to find the deleted file. As another example, when a user wants to manage the storage space on the electronic device, it is burdensome for the user to execute each application to manage their respective deleted files.

The electronic device of the present application advantageously provides a more centrally manageable recycle bin for the user of the electronic device. A software application for managing deleted files may obtain a list of deleted files from each of the plurality of different software applications, and present the complete list of deleted files to the user. The deleted files management software application may be regularly updated using lists of deleted files obtained from each of the different software applications. In this way, a user can easily manage the storage of the device. In particular, the user can easily manage deleted files from a plurality of different software applications.

### [Description of the Drawings]

FIG. 1 illustrates an embodiment of an electronic device displaying screens based on execution of a plurality of software applications.
FIG. 2 illustrates an example of a block diagram of an electronic device according to an embodiment.
FIG. 3 illustrates a flowchart of an electronic device according to an embodiment.
FIG. 4 is a flowchart illustrating an exemplary operation of an electronic device performing synchronization of a plurality of databases.
FIG. 5 is a flowchart illustrating an exemplary operation of an electronic device performing synchronization of a plurality of databases.
FIG. 6 illustrates an exemplary structure of a directory managed by an electronic device, according to an embodiment.
FIG. 7 illustrates an operation of an electronic device that scans an exemplary directory storing one or more files and/or sub-directories.
FIG. 8 illustrates an exemplary operation of an electronic device receiving a user input for deleting a file and/or directory.
FIG. 9 is a block diagram of an electronic device in a network environment according to various embodiments.

### [Mode for Invention]

Hereinafter, various embodiments of the present document will be described with reference to the accompanying drawings.

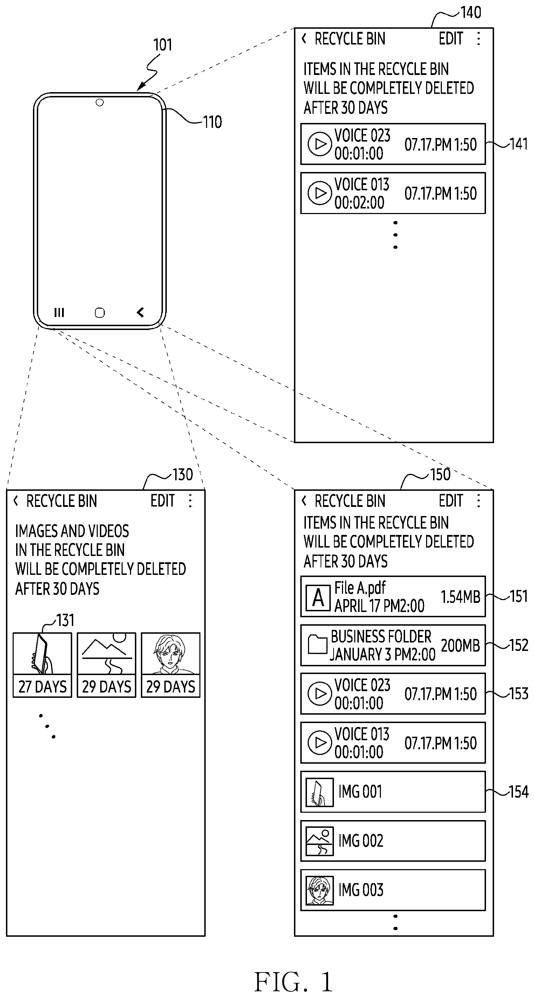

FIG. 1 illustrates an embodiment of an electronic device 101 displaying screens (e.g., a first screen 130, a second screen 140, and/or a third screen 150) based on execution of a plurality of software applications. That is, Figure 1 shows examples of screens 130, 140, 150 which may be displayed in response to the execution of one or more software applications. In terms of being owned by a user, the electronic device 101 may be referred to as a terminal (or user terminal). The terminal may include, for example, a personal computer (PC) such as a laptop and a desktop. The terminal may include, for example, a smartphone, a smart pad, and/or a tablet PC. The terminal may include a smart accessory such as a smartwatch and/or a head-mounted device (HMD). The embodiment is not limited thereto, and the terminal may include a home appliance such as a television (TV), a set-top box (STB) (or a set-top unit (STU)) and/or a beam projector.

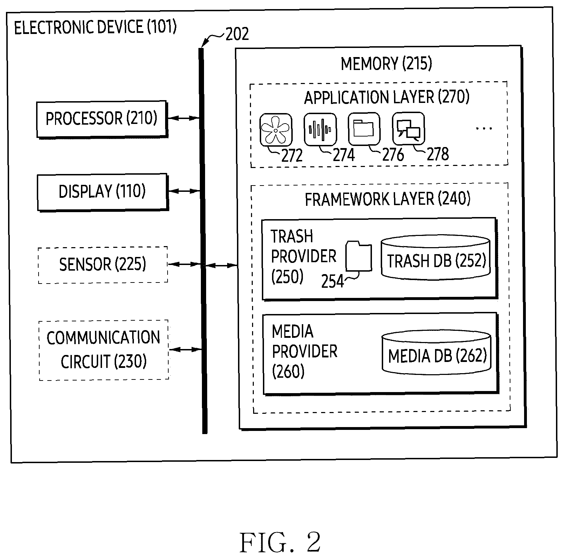

The electronic device 101 may include a component for outputting information stored in the electronic device 101. That is, the electronic device 101 may include an output means, such as a display. Referring to FIG. 1, an embodiment of the electronic device 101 including a display 110 is illustrated, but the embodiment is not limited thereto. The electronic device 101 may display, on the display 110, a user interface (UI) based on information stored in the electronic device 101. An exemplary hardware configuration of one or more components included in the electronic device 101 will be described with reference to FIG. 2.

According to an embodiment, the electronic device 101 may perform one or more operations associated with the generation, change, and/or deletion of information, based on or in response to the execution of a software application. In order to support various functions, the electronic device 101 may support installation of a plurality of software applications. A plurality of software applications installed in the electronic device 101 may be simultaneously executed based on multitasking. That is, a plurality of software applications may be executed by the electronic device at the same time.

In an embodiment, the electronic device 101 may store information generated or changed during the execution of a software application, in a component for preserving the information. The component may include a memory device, such as a storage medium. The electronic device 101 may manage or distinguish information stored in the storage, based on a file and/or a directory. For example, the electronic device 101 may manage information stored in the storage of the electronic device 101, based on a unit of a file and/or a directory. In an embodiment, the electronic device 101 may manage information stored in the storage, by using an address space based on a file and/or a directory. For example, the electronic device 101 may access a file and/or a directory stored in storage, by using a character string such as a path. A File and/or a directory stored in the storage may have a unique path.

In an embodiment, the electronic device 101 may delete (or erase) information (e.g., one or more files and/or a directory for accommodating one or more files) stored in the electronic device 101. Deletion of the information by the electronic device 101 may be performed based on a two-stage scheme. In order to reduce unintentional deletion of information, the electronic device 101 supporting the two-step scheme may preliminarily delete a specific file, based on an initial request (or initial input) for deleting the specific file. Hereinafter, deletion of a file and/or a directory may mean preliminary deletion of the file and/or the directory based on the initial request and/or the initial input.

In an embodiment, preliminary deletion of a file may include an operation of associating or linking the file with a designated attribute indicating that the file was deleted based on an initial request. The preliminary deletion of the file may include an operation of moving the file to a designated area of storage. The designated area may include a directory logically designated by an address space of the storage. In an embodiment, the directory may be referred to as a recycle bin.

In an embodiment, after the initial request based on the two-stage scheme, a state of the file corresponding to the initial request may be switched to a designated state capable of receiving a final request (or final input) for permanent deletion. When receiving the final request, the electronic device 101 may delete the file from the designated area of the storage. The embodiment is not limited thereto, and when the file is in the designated area, the electronic device 101 may receive a restoration request for restoring the file to the state that the file was in before the initial request was received.

As described above, the electronic device 101 may divide or separate a request for deleting a stored file into two-steps, thereby reducing the number of cases in which the file is deleted based on an unintended single input. Although an operation of the electronic device 101 based on a file has been described, the embodiment is not limited thereto, and the electronic device 101 may delete a directory of the storage based on the two-stage scheme. For example, a file and/or a directory may be accessible by the electronic device 101 and/or a user of the electronic device 101 until permanently deleted based on receiving a final request. A file and/or a directory permanently deleted in response to the final request are inaccessible by the electronic device 101 and/or the user of the electronic device 101.

For example, in response to a first user input to delete a file, the electronic device 101 may assign an attribute (or a flag value) indicated as deleted to the file, instead of directly deleting the file. That is, in response to receiving a first user input to delete a file, the electronic device may assign an attribute, indicator, flag value, or other symbol indicating that the file is deleted, rather than directly deleting the file or removing the file from the storage. For example, in response to the first user input to delete the file, the electronic device 101 may move the file to a designated area (e.g., a designated directory such as recycle bin) for storing a file and/or a directory indicated as deleted, instead of directly deleting the file, where directly deleting the file comprises removing the file from the storage permanently such that the user is no longer able to access the file. In the examples, the file corresponding to the first user input may be deleted in the electronic device 101 permanently (or irreversibly), based on a second user input after the first user input. In the examples, the file corresponding to the first user input may be moved or restored to a path before receiving the first user input, based on a third user input after the first user input. That is, the file which received the first user input may, in response to a third user input occurring after the first user input, be restored to the path or location that the file had before the first user input was made. The embodiment is not limited thereto, and the file corresponding to the first user input may be permanently deleted in the electronic device 101, independent of the second user input or prior to receiving the second user input. According to an embodiment, the electronic device 101 may perform the two-stage scheme in response to user inputs for each software application from a plurality of software applications.

Referring to FIG. 1, while each of a plurality of software applications is being executed, exemplary screens (e.g., a first screen 130 to a third screen 150) displayed in the display 110 of the electronic device 101 are illustrated. That is, Fig. 1 shows example screens of a plurality of executed software applications. In particular, the example screens relate to screens showing deleted files of the software applications. The plurality of software applications may include a first software application (e.g., a gallery application) that provides a first screen 130 for browsing (or viewing) an image file and/or a video file stored in the electronic device 101. The plurality of software applications may include a second software application (e.g., a recording application) that provides a second screen 140 for browsing an audio file stored in the electronic device 101. The plurality of software applications may include a third software application (e.g., a file browser application) that provides a third screen 150 for browsing a file and/or a directory stored in storage (or partition formed in the storage) of the electronic device 101. The third screen may show files deleted from a plurality of different software applications.

In an embodiment, the electronic device 101 may execute a plurality of software applications, by using an execution environment referred to as a sandbox (or application sandbox). Based on, or using, the sandbox, the electronic device 101 may execute instructions of the software application within an execution environment capable of restrictively accessing one or more resources of the electronic device 101. For example, in order to prevent a function executed based on, or using or with, a specific software application from interfering or interrupting execution of another software application, the electronic device 101 may separate execution environments of each of a plurality of software applications. For example, a file deleted based on, from, or using the first software application may be moved to a directory (e.g., recycle bin generated by the first software application) dedicated to the first software application by the execution environment. In the example, in order to support access to the file through the second software application and/or the third software application, the electronic device 101 according to an embodiment may provide a database and/or directory shared by a plurality of software applications.

Referring to FIG. 1, an exemplary state of the electronic device 101 receiving an input for deleting an image file based on the first software application is illustrated. The electronic device 101 identifying the input may display a visual object 131 corresponding to the image file indicated as deleted based on the first software application through the first screen 130 displayed on the display 110. That is, the electronic device may display a visual object 131 corresponding to the deleted image file of the first application on the first screen 130 displayed on the display 110. The visual object 131 may represent the deleted image file so that the user is provided with an indication of the file which has been deleted. The electronic device 101 may provide a list of one or more image files and/or video files indicated as deleted, through the first screen 130. In the list displayed through the first screen 130, the electronic device 101 may display a visual object 131 including at least one of a file name of the image file, a reduced size thumbnail for the image file, or a timing indicating when the image file will be permanently deleted.

Similarly, after receiving an input (e.g., the initial request based on the two-stage scheme) for deleting an audio file based on, of, or using the second software application, the electronic device 101 may display, through the second screen 140, a visual object 141 matched to an audio file indicated as deleted by the input. In the second screen 140 including a list of one or more audio files indicated as deleted, the electronic device 101 may display a visual object 141 including information associated with the audio file. The visual object 141 may be referred to as an item (or list item) of the list of the second screen 140. Information included in the visual object 141 may include at least one of an icon representing the audio file, a file name of the audio file, a total playback time of the audio file, or a creation time of the audio file.

Referring to FIG. 1, after receiving inputs for deleting an image file and an audio file based on each of the first software application and the second software application, the electronic device 101 may display visual objects 153 and 154 corresponding to each of the deleted image file and the deleted audio file through the third screen 150 provided by the third software application. In the third screen 150, the electronic device 101 may display a list of one or more files and/or directories indicated as deleted based on a plurality of software applications of the electronic device 101 including the first software application to the third software application. That is, the third software application shows a third screen 150, where the third screen shows visual indicators representing deleted files from a plurality of software applications. In this case, the third screen 150 shows visual indicators 151, 152, 153 and 154, relating to an image software application (the first software application), an audio software application (the second software application) and the one or more software applications relating to the files represented by visual indicators 151 and 152.

In a list of an exemplary screen 150 of FIG. 1, the electronic device 101 may display a visual object 151 corresponding to a file (e.g., a document file based on a portable document format (pdf)) indicated as deleted based on execution of the third software application (that is, a file which was deleted from the third software application during the execution of the third software application), a visual object 152 corresponding to a directory indicated as deleted based on execution of the third software application (that is, a directory which was deleted from the third software application during the execution of the third software application), a visual object 153 corresponding to the audio file indicated as deleted based on execution of the second software application (that is, an audio file which was deleted from the second software application during the execution of the second software application), and/or a visual object 154 corresponding to the image file indicated as deleted based on execution of the first software application (that is, an image file which was deleted from the first software application during the execution of the first software application). While files that were deleted by a plurality of software applications are displayed through a screen (e.g., the third screen 150) of a specific software application (e.g., third software application), a user of the electronic device 101 may browse all of the files through a single screen without individually executing different software applications. That is, even though the files were deleted from a plurality of different software applications, the user may view all of the deleted files from the plurality of software applications using the single screen. It is therefore not necessary for a user to execute each of the different software applications to view the list of deleted files.

As described above, according to an embodiment, the electronic device 101 may display, on the display 110, a first screen based on execution of the first software application among the plurality of software applications. Based on the first screen, the electronic device 101 may receive a user input for browsing information indicated as deleted in memory of the electronic device 101. In response to the user input, the electronic device 101 may obtain information including a file indicated as deleted based on the third software application different from the first software application. Based on the information, the electronic device 101 may display, on the display 110, a second screen (e.g., the third screen 150 of FIG. 1) including a visual object (e.g., visual objects 131, 141, 151, 152, 153, and 154) corresponding to the file. That is, when the first screen corresponding to an execution screen of the first software applications is being executed, a user input may be received to indicate that the user would like to view the files which have been deleted. In response to this user input, the electronic device may obtain, from a third software application, information relating to the files which have been deleted from the first software application. The electronic device may then display visual objects corresponding to the files which have been deleted from the first software application. The first software application and the third software application are different applications.

According to an embodiment, the electronic device 101 may provide a user experience for integrally managing files and/or directories that were deleted based on different software applications, by using the second screen. Based on the second screen, the electronic device 101 may prevent to or simplify a user's action of removing different files and/or directories, by accessing individually recycle bins dedicated to the software applications. For example, based on the second screen, the electronic device 101 may execute a function for managing files and/or directories that were deleted based on different software applications, without displaying different screens corresponding to each of the recycle bins of different software applications. That is, a user of an electronic device may use a central software application or program to manage the files and/or directories which have been deleted from a plurality of software applications or programs so it is not necessary for the user to access the recycle bins of each of the different software applications.

Hereinafter, programs executed by the electronic device 101 for managing files and/or directories that were deleted by different software applications will be described with reference to FIG. 2.

FIG. 2 illustrates an example of a block diagram of the electronic device 101 according to an embodiment. The electronic device 101 of FIG. 1 may include an exemplary hardware configuration illustrated in FIG. 2 and one or more programs executed based on the hardware configuration. The electronic device 101 may include at least one of a processor 210, memory 215, a display 110, a sensor 225, or a communication circuit 230. The processor 210, the memory 215, the display 110, the sensor 225, and the communication circuit 230 may be electrically and/or operably coupled with each other by an electronical component such as a communication bus 202. Hereinafter, the operational coupling of the hardware components may mean that a direct or indirect connection between the hardware components is established by wire or wirelessly, so that a second hardware component is controlled by a first hardware component. Although illustrated based on different blocks, embodiments are not limited thereto, and a portion of hardware components (e.g., at least a portion of the processor 210, the memory 215, and the communication circuit 230) of FIG. 2 may be included in a single integrated circuit, such as a system on a chip (SoC). The type and/or number of hardware components included in the electronic device 101 are not limited to those illustrated in FIG. 2. For example, the electronic device 101 may include only a portion of the hardware components illustrated in FIG. 2.

According to an embodiment, the processor 210 of the electronic device 101 may include a hardware component for processing data based on or in response to a plurality of instructions. For example, the hardware for processing data may include an arithmetic and logic unit (ALU), a floating point unit (FPU), a field programmable gate array (FPGA), a central processing unit (CPU), a neural processing unit (NPU), and/or an application processor (AP). The number of the first processor 210 may be one or more. For example, the first processor 210 may have a structure of a multi-core processor such as a dual core, a quad core, a hexa core, or an octa core.

According to an embodiment, the memory 215 of the electronic device 101 may include a hardware component for storing data and/or instruction inputted to or outputted from the processor 210. For example, the memory 215 may include volatile memory such as random-access memory (RAM) and/or non-volatile memory such as read-only memory (ROM). For example, volatile memory may include at least one of dynamic RAM (DRAM), static RAM (SRAM), cache RAM, and pseudo SRAM (PSRAM). For example, non-volatile memory may include at least one of programmable ROM (PROM), erasable PROM (EPROM), electrically erasable PROM (EEPROM), flash memory, hard disk, compact disk, solid state drive (SSD), and embedded multimedia card (eMMC).

According to an embodiment, the display 110 of the electronic device 101 may output visualized information (e.g., the first screen 130, the second screen 140, and/or the second screen 150 of FIG. 1) to a user. For example, the display 110 may visualize information provided from a graphic processing unit (GPU) and/or the processor 210. The display 110 may include a liquid crystal display (LCD), a plasma display panel (PDP), and/or a plurality of light emitting diodes (LEDs). The LED may include an organic LED (OLED). The display 110 may include a flat panel display (FPD) and/or an electronic paper. The embodiment is not limited thereto, and the display 110 may have at least a partially curved shape or a deformable shape. The deformable display 110 may be referred to as a flexible display.

According to an embodiment, the display 110 of the electronic device 101 may include a sensor (e.g., a touch sensor panel (TSP)) for detecting an external object (e.g., a user's finger) on the display 110. For example, based on the TSP, the electronic device 101 may detect an external object floating on the display 110 or contacting with the display 110. In response to detecting the external object, the electronic device 101 may execute a function associated with a specific visual object contact with the external object or corresponding to a position on the display 110 adjacent to the external object, among visual objects being displayed in the display 110.

The sensor 225 of the electronic device 101 according to an embodiment may generate information capable of being processed by the processor 210 and/or the memory 215 from non-electronic information associated with the electronic device 101. For example, the sensor 225 may include a global positioning system (GPS) sensor for detecting a geographic location of the electronic device 101. For example, in addition to the GPS method, the sensor 225 may generate information indicating the geographic location of the electronic device 101, based on a global navigation satellite system (GNSS) such as Galileo, Beidou, or Compass. The information may be stored in the memory 215, processed by the processor 210, or transmitted to another electronic device distinguished from the electronic device 101 through the communication circuit 230. In an embodiment, the sensor 225 may include an image sensor, an illuminance sensor, and/or a ToF sensor for detecting electromagnetic waves including light. The sensor 225 may include a sensor for detecting motion of the electronic device 101, such as an inertial measurement unit (IMU), a gyro sensor, an acceleration sensor, a gravity sensor, and/or a 6-degree of freedom (DoF) sensor. The sensor 225 may include an illuminance sensor, a proximity sensor, a grip sensor and/or a hall sensor.

According to an embodiment, the communication circuit 230 of the electronic device 101 may include hardware for supporting transmission and/or reception of an electrical signal between the electronic device 101 and an external electronic device. For example, the communication circuit 230 may include at least one of a MODEM, an antenna, and an optic/electronic (O/E) converter. The communication circuit 230 may support transmission and/or reception of the electrical signal based on various types of protocols, such as ethernet, local area network (LAN), wide area network (WAN), wireless fidelity (WiFi), near field communication (NFC), Bluetooth, Bluetooth low energy (BLE), ZigBee, long term evolution (LTE), fifth generation (5G) new radio (NR), sixth generation (6G), and/or above-6G.

Although not illustrated, the electronic device 101 according to an embodiment may include an output means for outputting information in a form other than a form in which information is visualized. For example, the electronic device 101 may include a speaker for outputting an acoustic signal. For example, the electronic device 101 may include a motor and/or a haptic actuator for providing haptic feedback based on vibration.

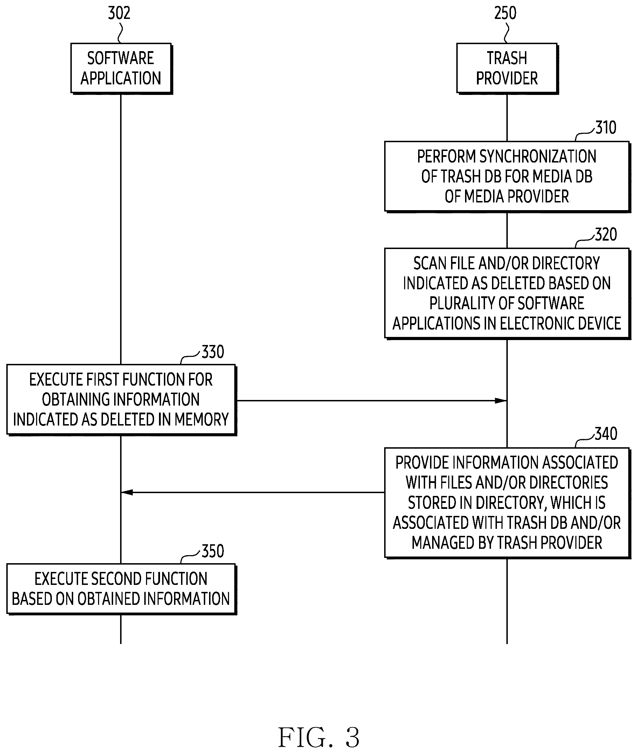

Referring to FIG. 2, instructions (or commands) indicating a calculation and/or operation to be performed on data by the processor 210 may be stored in the memory 215. A set of instructions may be referred to as firmware, operating system, process, routine, sub-routine, program, and/or software application (or application). For example, the electronic device 101 and/or the processor 210 may perform at least one of operations of FIGS. 3 to 5 and/or 8, when a set of a plurality of instructions deployed in a form of operating system, firmware, driver, and/or software application is executed. Hereinafter, a software application being installed in the electronic device 101, which is a plurality of instructions provided in a form of the software application being stored in the memory 215 of the electronic device 101, may mean that the software application is stored in a format (e.g., a file with an extension specified by the operating system of the electronic device 101) executable by the processor 210.

Referring to FIG. 2, software applications installed in the electronic device 101 may be classified into a framework layer 240 and/or an application layer 270, based on a target. The embodiment is not limited thereto, and the software applications may be classified into another layers, such as a hardware abstraction layer (HAL). The layers of FIG. 2 are divided logically (or for convenience of explanation), and it may not mean that an address space of the memory 215 is divided by the layers.

For example, software applications (e.g., a trash provider 250 and/or a media provider 260) for providing a function executable by another software application installed in the electronic device 101 may be included in the framework layer 240. Software applications included in the framework layer 240 may provide an application programming interface (API) capable of being executed (or invoked or called) by another software applications.

For example, software applications designed to target or be used by a user of the electronic device 101 may be included in the application layer 270. A gallery application 272 for browsing an image file and/or a video file, a recording application 274 for creating, editing and/or managing an audio file, a file browser application 276 for managing a file and/or a directory stored in the memory 215, and a messenger application 278 for transmitting and/or receiving a text message (e.g., a short message service (SMS) and/or a long message service (LMS)) are illustrated as an example of a software application included in the application layer 270, but embodiments are not limited thereto.

In an embodiment, the processor 210 of the electronic device 101 may display a screen (e.g., the first screen 130, the second screen 140, and/or the third screen 150 of FIG. 1) provided by the software application executed on the display 110, based on, or in response to, execution of a software application included in the application layer 270. For example, among the plurality of software applications executed by the processor, at least one application corresponding to a screen visible through the display 110 may be classified into a foreground application, and other software applications different from the foreground application may be classified into a background application (or background process and/or daemon).

According to an embodiment, the processor 210 of the electronic device 101 may manage media content (e.g., image file, video file, and/or audio file) stored in the memory 215, based on execution of a media provider 260. In order to manage the media content, a media database (DB) 262, which is updated based on execution of the media provider 260, may be stored in the memory 215. A DB such as the media DB 262 may include a set of systematized information, one or more software applications managing the information, or a combination thereof. In the set of information, different information may be combined with each other, based on a unit such as type, attribute, column, record, tuple, item, and/or table. The combination of information may be used to add, delete, update, and search information, within the DB. For example, in a state in which the electronic device 101 searches for information under a designated condition, the electronic device 101 may further identify information satisfying the condition and other information combined with the information, by using the DB. In terms of managing the media DB 262, the media provider 260 may be referred to as a managing application (or a media DB managing application).

In an embodiment, the update and/or search of the DB may be performed based on a character string in a format such as a structured query language (SQL). For example, the processor 210 executing the media provider 260 may search for information stored in the media DB 262, by using a character string in the SQL format provided based on another software application. The processor 210 may execute a function of the other software application utilizing the searched information, by executing the other software application using the searched information.

In an embodiment, the media DB 262 managed based on or in response to the execution of the media provider 260 may include records corresponding to each of media contents stored in the memory 215. Each of the records may include an index value (e.g., unique value, key value, and/or identifier (ID)) for distinguishing records. Each of the records may include at least one of a path, name, timestamp (e.g., a timestamp indicating a timing at which the media content was created) or type (e.g., media type and/or multipurpose internal mail extensions (MIME) type) of the corresponding media content. Each of the records may include a count number indicating the number of times the corresponding media content has been updated. The count number may have a name such as "generation_modified".

The count number may be gradually increased based on atomicity, in response to an event for at least partially changing media content. For example, when a maximum value among count numbers of each of the records of the media DB 262 is k, in response to update of a media content, the electronic device 101 may change a count number of a record of the media content to k+1. For example, a record of the media DB 262 with the largest count number may be associated with (or linked to) a last updated media content.

In an embodiment, each of records in the media DB 262 may include an attribute indicating whether a corresponding media content has been deleted based on the two-stage scheme (or based on an initial input set by the two-stage scheme). The attribute may have a name such as "is_trashed". The attribute may have a value based on a boolean type. For example, when the media content has not been deleted, the attribute corresponding to the media content in the media DB 262 may have a designated value (e.g., 0 and/or logic 0) indicating FALSE. For example, in response to an initial input for deleting media content, the processor 210 may assign a designated value (e.g., 1 and/or logic 1) indicating TRUE to an attribute with the name "is_trashed", in a record of the media DB 262 corresponding to the media content.

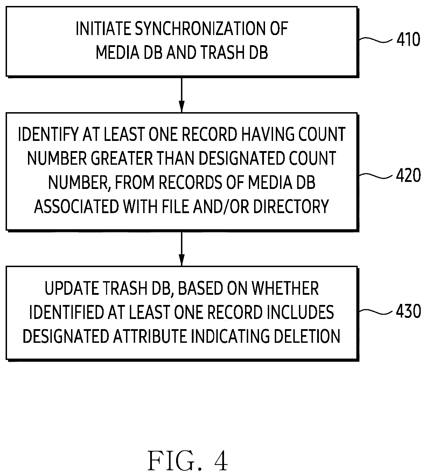

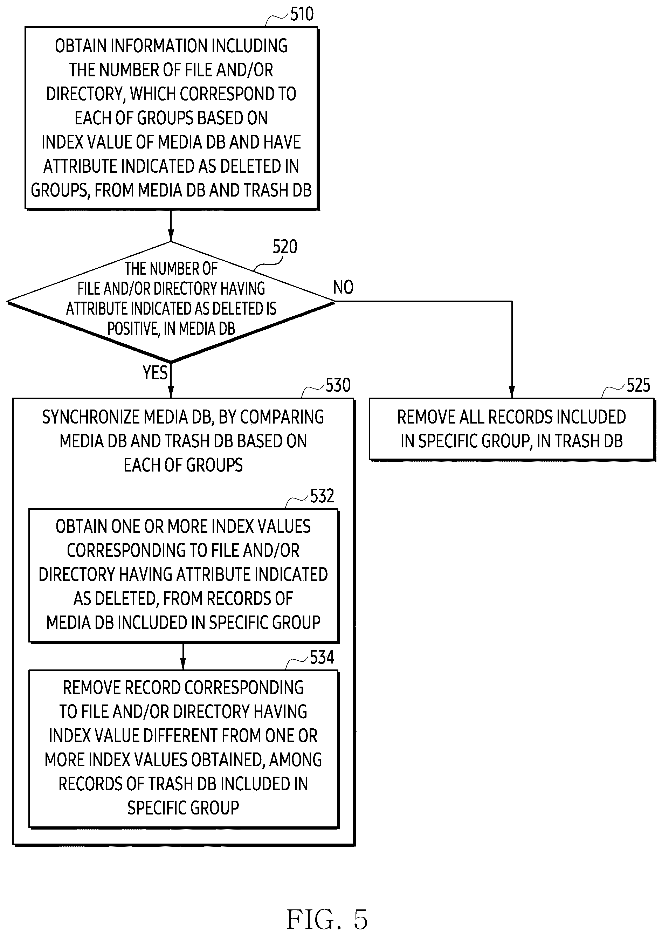

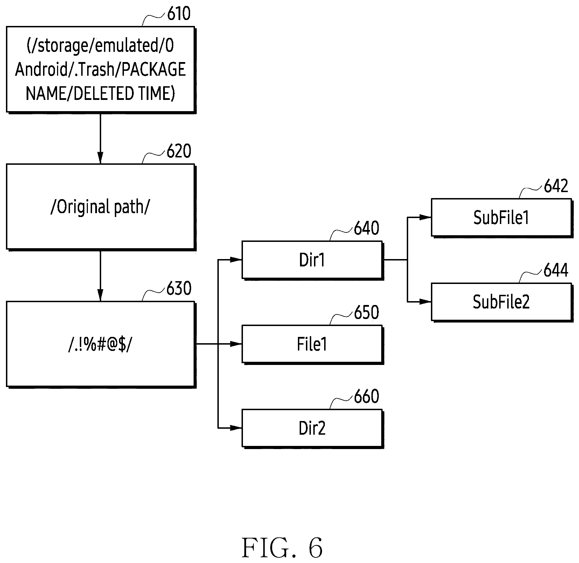

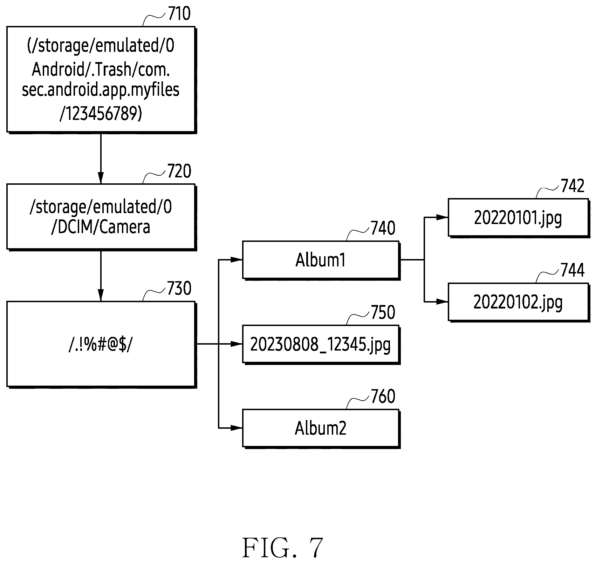

According to an embodiment, the processor 210 of the electronic device 101 may provide a trash DB 252 and/or a directory 254, which are commonly accessible based on execution of different software applications (e.g., software applications classified into the application layer 270) in the memory 215, based on execution of a trash provider 250. That is, the trash DB and/or directory are accessible by different software applications in response to the execution of the trash provider. The trash DB and/or directory are accessible by the different software applications and the trash provider. Executing the trash provider enables a trash DB/directiory to access the files of the plurality of different software applications. In terms of managing the trash DB 252, the trash provider 250 may be referred to as a managing application (or a trash DB 252 managing application). In terms of managing the directory 254, the trash provider 250 may be referred to as a trash directory managing software application. In a state in which the trash provider 250 is executed, the processor 210 may synchronize the media DB 262 and the trash DB 252, by periodically and/or repeatedly scanning the media DB 262. An operation of the processor 210 changing the trash DB 252 based on an attribute (e.g., an attribute having a name such as "is_trashed") of the media DB 262 will be described with reference to FIGS. 4 and/or 5. In a state in which the trash provider 250 is executed, the processor 210 may identify a sub-directory and/or a file stored in the directory 254 based on another software application different from the trash provider 250, by scanning the directory 254. An operation of the processor 210 scanning the directory 254 will be described with reference to FIGS. 6 and/or 7.

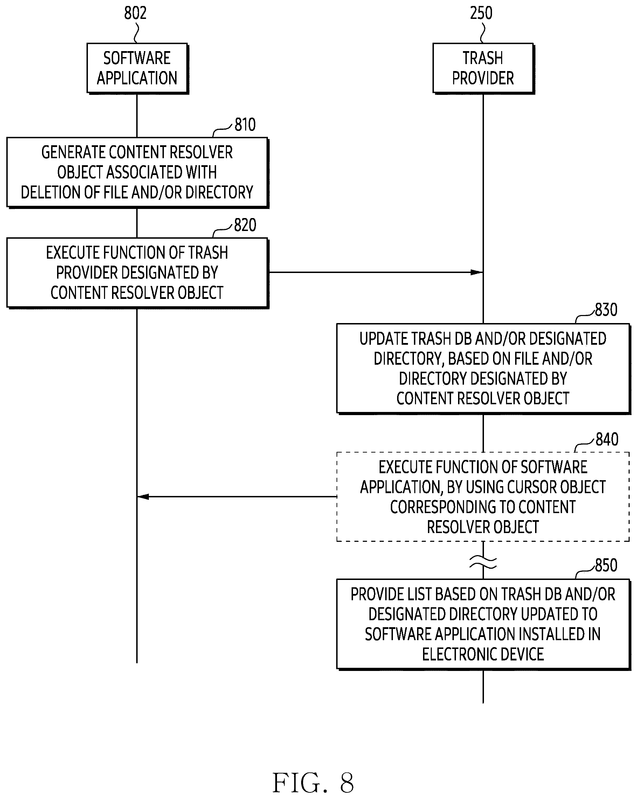

In an embodiment, the electronic device 101 operating based on an operating system such as Android may support exchange of information between software applications based on (or using) a content provider. The content provider may be a component included in a software application executed based on Android. The processor 210 may execute a function for providing information from a specific software application to another software application, by using an object (e.g., a content resolver object) set by the content provider. For example, the processor 210 executing software applications different from the trash provider 250 may execute a function of the trash provider 250 for storing a file and/or a directory in the directory 254, by using a content provider. The processor 210 executing the function may store a file and/or a directory designated by the content provider in the directory 254, or may generate or add a record associated with the file and/or the directory designated by the content provider in the trash DB 252. An operation of the processor 210 based on a content provider will be described with reference to FIG. 8.

As described above, according to an embodiment, the electronic device 101 may include the directory 254 and/or a DB (e.g., the trash DB 252) for integrally managing files and/or directories deleted by different software applications. For example, the processor 210 of the electronic device 101 may periodically update the directory 254 and/or the trash DB 252, based on an execution of the trash provider 250. The electronic device 101 may provide information indicating which software application was used to delete a file and/or a directory, based on the directory 254 and/or the trash DB 252. The electronic device 101 may support accessing a file and/or a directory deleted by another software application through a recycle bin managed by a specific software application, based on the directory 254 and/or the trash DB 252. A user of the electronic device 101 who deleted a specific file may access the file through the recycle bin of any software application, without executing the software application that deleted the file. The electronic device 101 may provide information on a file and/or a directory indicated as deleted, based on a structure of the trash DB 252 and/or the directory 254.

Hereinafter, an exemplary operation of the electronic device 101 based on execution of the trash provider 250 will be described with reference to FIG. 3.

FIG. 3 is a flowchart of a method of operating an electronic device according to an embodiment. The electronic device 101 of FIG. 1 and/or FIG. 2 may perform an operation of an electronic device described with reference to FIG. 3. The electronic device 101 and/or the processor 210 of FIG. 2 may perform at least one of the operations of FIG. 3.

According to an embodiment, an electronic device may manage one or more files and/or directories which have been indicated as deleted, by using a trash provider 250 that does not provide a screen displayed on a display (e.g., the display 110 of FIG. 2). That is, the trash provider 250 may not be an application which is directly operable by the user of the electronic device, but instead is an application which works in the background to manage the storage of deleted files from a plurality of software applications. A processor of the electronic device may automatically execute the trash provider 250 based on completion of booting of the electronic device 101. The trash provider 250 may be executed as a background process, and may be executed independently of a screen displayed on a display and/or interaction between the electronic device and a user based on the screen. Based on the trash provider 250 executed as a background process, the processor may perform at least one of operations 310 and 320. At least one of operations 310 and 320 may be performed by the processor repeatedly or periodically.

Referring to FIG. 3, in operation 310, the processor of the electronic device executing the trash provider 250 may perform synchronization for a trash DB (e.g., the trash DB 252 of FIG. 2) with respect to a media DB (e.g., the media DB 262) of a media provider (e.g., the media provider 260 of FIG. 2). The synchronization of the operation 310 may include loading (or searching) for a record in a media DB, where the record has an attribute indicating that the record has been deleted. An operation of the processor based on the loaded record in the media DB will be described with reference to FIG. 4. Based on or in response to a comparison (or reconciliation) performed between records of the media DB and records of the trash DB, the synchronization of the operation 310 may include deleting a record corresponding to a file and/or a directory indicated as restored by the media DB among the records of the trash DB. An operation of the processor based on a comparison between records of the media DB and records of the trash DB will be described with reference to FIG. 5.

Referring to FIG. 3, in operation 320, the processor of the electronic device executing the trash provider 250 may scan a file and/or a directory indicated as deleted, where the deleted file/directory originated from one of the plurality of software applications (e.g., a software application 302) in the electronic device. The scan may include scanning a designated directory (e.g., the directory 254 of FIG. 2) managed by the trash provider 250. For example, in response to a user input for deleting a file and/or a directory, the processor may move or store the file and/or the directory corresponding to the user input in the designated directory, while executing a software application different from the trash provider 250, where the file and/or the directory are deleted by the user from the software application different from the trash provider. The processor may store the file and/or the directory in the designated directory, based on a rule required by the trash provider 250. For example, the file and/or the directory stored in the designated directory may have a path based on the rule. Using the file and/or the directory having the path based on the rule, the processor may generate or change a record based on the file and/or the directory, in a trash DB. An operation of the processor identifying a file and/or directory in a designated directory, which have a path based on the rule, will be described with reference to FIGS. 6 and/or 7.

Referring to FIG. 3, in operation 330, the processor of the electronic device executing a software application 302 may execute a first function for obtaining information (e.g., a file and/or a directory) indicated as deleted in memory. The first function may be executed in response to a user input received through a screen provided based on execution of the software application 302. The software application 302 of the operation 330 may include a plurality of software applications included in the application layer 270 of FIG. 2. The processor executing the first function supported by the software application 302 may perform operation 340 based on execution of the trash provider 250, by using a content provider and/or intent defined for communication between software applications.

Referring to FIG. 3, in operation 340, the processor of the electronic device executing the trash provider 250 may provide information associated with files and/or directories stored in a directory, which is associated with the trash DB and/or managed by the trash provider. The processor may obtain or generate information to be provided to the software application 302, by searching the trash DB using a designated condition based on the software application 302. The processor may obtain information to be provided to the software application 302, based on files and/or directories included in a designated directory associated with the trash provider 250. The information of the operation 340 may be provided, to the software application 302, in a format of a cursor object matching a content resolver object of the content provider.

Referring to FIG. 3, in operation 350, the processor of the electronic device executing the software application 302 may execute a second function based on the information provided based on the operation 340 of the trash provider 250. The second function may be specified by the user input for executing the first function of the operation 330. For example, in response to a user input to access a recycle bin of the software application 302, the processor of the electronic device may display a screen (e.g., the first screen 130, the second screen 140, and/or the third screen 150 of FIG. 1) associated with the recycle bin based on execution of the second function of operation 350, after obtaining information managed by the trash provider 250 based on execution of the first function in operation 330. The embodiment is not limited thereto, and the second function of the operation 350 may include displaying at least partially information of operation 340.

As described above, according to an embodiment, the processor of the electronic device may obtain information including a file and/or a directory indicated as deleted in the memory, by using a trash DB, which is managed by the trash provider 250 and synchronized with the media DB accessible by a plurality of software applications, while executing the software application 302. The processor obtaining the information may output a file and/or a directory, which was deleted by another software application different from the software application 302, to the user, based on execution of the second function of operation 350.

FIG. 4 is a flowchart illustrating an exemplary operation of an electronic device performing synchronization of a plurality of databases (e.g., the media DB 262 and/or the trash DB 252 of FIG. 2). The electronic device 101 of FIG. 1 and/or FIG. 2 may perform an operation of an electronic device described with reference to FIG. 4. The electronic device 101 and/or the processor 210 of FIG. 2 may perform at least one of operations of FIG. 4. The operations described with reference to FIG. 4 may be associated with or included in operation 310 of FIG. 3. The operations of FIG. 4 may be performed by an electronic device executing the trash provider 250 of FIG. 2.

Referring to FIG. 4, in operation 410, according to an embodiment, a processor of an electronic device may initiate synchronization of a media DB (e.g., the media DB 262 of FIG. 2) and a trash DB (e.g., the trash DB 252 of FIG. 2). The processor may perform operation 410 based on or in response to the execution of a trash provider. The trash provider may be executed while the electronic device is booted or in response to completion of the booting of the electronic device. Based on execution of the trash provider, the processor of the electronic device may perform operations of FIG. 4. Operation 410, like operation 330 of FIG. 3, may be performed based on execution of a function (e.g., a function of another software application different from the trash provider) associated with a designated directory managed by the trash provider and/or the trash DB.

Before performing synchronization of the operation 410 of FIG. 4, a media DB managed by the media provider 260 of FIG. 2 may be changed in response to the generation, change, and/or deletion of media content. For example, when a user controls a camera of the electronic device to take a photo, an image file including the photo may be stored in the electronic device, and a record corresponding to the image file may be added to a media DB. For example, when the user edits the image file using the gallery application 272 of FIG. 2 (e.g., when changing a name of the image file, and/or adjusting brightness and/or chroma of the photo included in the image file), a count number (e.g., a count number having a name of "generation _modified") in the record of the media DB may be increased. For example, when the user deletes the image file based on execution of the file browser application 276 and/or the gallery application 272 of FIG. 2, a designated value (e.g., TRUE, 1 and/or logic 1) indicating deletion may be assigned to a designated attribute (e.g., an attribute having a name of "is_trashed") in the record of the media DB. The attribute indicates a status of the file. The attribute indicates whether the file is deleted or not deleted.

According to an embodiment, in response to the synchronization process of operation 410, the processor of the electronic device may obtain, among the records in the media DB, one or more records having a designated value indicating a deleted file and/or directory as a designated attribute. When the designated attribute indicates that the associated file or directory is a deleted file or directory, the record for the associated file or directory may have a first associated designated value. When the designated attribute indicates that the associated file or directory is not a deleted file or directory, the record for the associated file or directory may have a second associated designated value. The electronic device may obtain one or more records indicating a deleted file or directory based on the designated value assigned to the one or more records. Based on the obtained one or more records, the processor may update the trash DB.

Referring to FIG. 4, in operation 420, according to an embodiment, the processor of the electronic device may identify at least one record having a count number greater than a designated count number from records of the media DB associated with a file and/or directory. The count number of operation 420 may include a column in a record of the media DB having a name of "generation_modified". The designated count number of operation 420 may be a maximum count number stored in the media DB, which was obtained at a timing of synchronizing the media DB and the trash DB before synchronization of operation 410. Based on operation 420, the processor may search at least one record updated after the timing, from the media DB.

In an embodiment, the processor, which executes the trash provider, identifying at least one record of the media DB based on operation 420 may include an operation of providing a query (e.g., a query including a character string based on SQL) for identifying the at least one record to a media provider corresponding to the media DB. In order to access the media DB using the media provider, the processor may generate an object (e.g., an intent object and/or a content resolver object) for providing the query to the media provider.

In an embodiment, when a name of the media DB is "files", the character string may have a format of "SELECT * FROM files WHERE generation_modified > ?". Although the character string written with uppercase and lowercase letters is illustrated, the embodiment is not limited thereto, and the processor may operate similarly with respect to a character string written in lowercase. The "SELECT" of the character string may be an operation code of SQL indicating a database search. The "*" of the character string may be replaced with a name of a column to be extracted from the media DB. The processor may identify operand (e.g., "files") after "FROM" of the character string as a name of a database (or a table in the database) to be searched based on the character string. The processor may identify operand after "WHERE" of the character string as a search condition (or filtering condition). The "?" of the character string may be replaced with the designated count number of the operation 420. For example, the "generation_modified > ?" of the character string may indicate that an attribute having a name of "generation_modified" searches for a record exceeding the count number written at "?". The processor may obtain at least one record of operation 420, by executing a media provider based on the object including the character string.

Referring to FIG. 4, in operation 430, according to an embodiment, the processor of the electronic device may update the trash DB based on whether the identified at least one record includes a designated attribute indicating deletion. The designated attribute of operation 430 may be a column having a name of "is_trashed". The processor identifying a record that stores a designated value indicating deletion of a file and/or a directory as the designated attribute may update the trash DB, based on the record. For example, a record corresponding to the record may be inserted into the trash DB. For example, a record of the trash DB corresponding to the record may be updated.

As described above, according to an embodiment, the processor of the electronic device may limitedly search for the media DB, by using a count number of the media DB. Since all files of the electronic device associated with an image, video and/or sound are managed by the media DB, searching the entire media DB may require a relatively long time. The processor may extract only a record of the newly updated media DB after a timing of last synchronizing the media DB and the trash DB, by performing a search based on a designated attribute in records of the media DB having a count number greater than the count number. Based on extraction of the record of the media DB described above, the processor may obtain one or more records to be used for updating the trash DB, based on a relatively short time and/or a relatively small amount of calculation. That is, the processor may perform a search starting from the last place that the previous search finished, so that it is not necessary to repeatedly search the same records.

Based on the operation described above with reference to FIG. 4, the processor may identify one or more media contents (e.g., image file, video file, and/or audio file) deleted after the last or most recent synchronizing of the media DB and the trash DB. Based on the operation of FIG. 4, one or more records corresponding to the one or more media contents may be inserted into the trash DB. Since the processor deletes a file and/or a directory based on two-stage scheme, the file and/or the directory indicated as deleted may be restored by an additional input by the user.

Hereinafter, an exemplary operation of an electronic device for identifying a file and/or a directory restored by a user input will be described with reference to FIG. 5.

FIG. 5 is a flowchart illustrating an exemplary operation of an electronic device performing synchronization of a plurality of databases. The electronic device 101 of FIG. 1 and/or FIG. 2 may perform an operation of an electronic device described with reference to FIG. 5. The electronic device 101 and/or the processor 210 of FIG. 2 may perform at least one of operations of FIG. 5. The operations described with reference to FIG. 5 may be associated with or included in the operation 310 of FIG. 3 and/or the operations of FIG. 4. The operations of FIG. 5 may be performed by an electronic device executing the trash provider 250 of FIG. 2.

The operations of FIG. 5 may be performed to delete, from a trash DB, a record having a designated value indicating that it was not deleted and/or a record that does not exist in the media DB, which is a designated attribute in a media DB. In order to reduce the number of queries for accessing the media DB, the processor may use groups of records of the media DB, which are distinguished by an index value of the record. The group of the media DB may correspond to a section of index values for distinguishing files associated with the media DB. The processor may obtain, in the section, the number of files and/or directories indicated as deleted by a designated attribute.

Referring to FIG. 5, in operation 510, according to an embodiment, the processor of the electronic device may obtain information including the number of files and/or directories, which correspond to each of groups based on an index value and have an attribute indicated as deleted in groups, from a media DB (e.g., the media DB 262 of FIG. 2) and a trash DB (e.g., the trash DB 252 of FIG. 2). The attribute of operation 510 may include a designated attribute having a name of "is_trashed". The processor may obtain the number of parameters and/or directories having the attribute indicated as deleted in each of the groups, by using groups (or sections) of index values grouped in a designated range (e.g., 512).

For example, when the index value has a field name of "_id" and a name of the media DB and/or table in the media DB is "files", a character string (or a query including the character string) with a format "SELECT COUNT(_id) FROM files WHERE is_trashed=1 GROUP BY _id/512 ORDER BY _id ASC" may be used to search the media DB. The "COUNT(_id)" of the character string may instruct to output the number of records satisfying a condition set by the character string after "WHERE" within the character string. When searching the media DB based on the character string, the processor may obtain the number of records having a designated value indicating a deleted file and/or directory from each of groups. When searching the media DB based on the character string, the processor may obtain the number of records having a designated value indicated as deleted as the designated attribute (e.g., "is_trashed=1"), within groups (n > 0) including index values from (512×(n-1)+1) to (512×n).

Information obtained based on operation 510 may include a two-dimensional array. The two-dimensional array may include the number of records included in groups and a representative value of the groups (e.g., index value set or corrected to 512×(n-1) value), obtained by searching the media DB based on the character string. For example, based on groups grouped by the index value, the processor may obtain a two-dimensional array including a first row and a second row of Table 1 as elements.

**[Table 1]**

| n | 1 | 2 | 3 | ... |
|---|---|---|---|---|
| Records in the media DB included in the n group | Up to 512 records with index values from 1 to 512 | Up to 512 records with index values from 513 to 1024 | Up to 512 records with index values from 1025 to 1536 | ... |
| First row | 0 (= 512 × (1-1)) | 512 ( = 512 × (2-1)) | 1024 ( = 512 × (3-1)) | ... |
| Second row | Among records in the first group, the number of records with "1" as an attribute having a name of "is_trashed" | Among records in the second group, the number of records with " 1 " as an attribute having a name of "is_trashed" | Among records in the third group, the number of records with " 1" as an attribute having a name of "is_trashed" | ... |

As described above, an operation of the processor searching for the media DB may be similarly performed for the trash DB. For example, when a name of a table in the trash DB is "local", the processor may search for the trash DB, by using a character string (or a query including the character string) with a format "SELECT COUNT(_id) FROM local WHERE is_trashed=1 GROUP BY _id/512 ORDER BY _id ASC". Based on the search of the trash DB, the processor may obtain the number of records having a designated value indicating a deleted file and/or directory, in groups grouped by index values of the trash DB. The processor may obtain a two-dimensional array including the first row and the second row of Table 2 as elements, storing the numbers obtained from the trash DB.

**[Table 2]**

| n | 1 | 2 | 3 | ... |
|---|---|---|---|---|
| Records in the trash DB included in the n group | Up to 512 records with index values from 1 to 512 | Up to 512 records with index values from 513 to 1024 | Up to 512 records with index values from 1025 to 1536 | ... |
| First row | 0 (= 512 × (1-1)) | 512 (= 512 × (2-1)) | 1024 ( = 512 × (3-1)) | ... |
| Second row | Among records in the first group, the number of records with " 1 " as an attribute having a name of "is_trashed" | Among records in the second group, the number of records with " 1 " as an attribute having a name of "is_trashed" | Among records in the third group, the number of records with " 1 " as an attribute having a name of "is_trashed" | ... |

Referring to Table 1 and Table 2, in each of the groups in the media DB and the groups in the trash DB that correspond to each other, the two-dimensional array obtained from the media DB and the two-dimensional array obtained from the trash DB may be generated to compare the number of files and/or directories indicated as deleted.

Referring to FIG. 5, in operation 520, according to an embodiment, the processor of the electronic device may identify whether the number of files and/or directories having the attribute indicated as deleted is positive, in the media DB. The processor obtaining the two-dimensional array including the first row and the second row of Table 1 may identify whether the numbers corresponding to each of groups stored in the second row are positive. When a non-positive number (e.g., 0) is identified (520-NO), the processor may perform operation 525. When a positive number is identified (520-YES), the processor may perform operation 530. In an embodiment in which a two-dimensional array based on n groups is obtained, the processor may perform operations 520, 525, and 530 for each of the groups.

Referring to FIG. 5, in operation 525, according to an embodiment, the processor of the electronic device may remove all records included in a specific group, in the trash DB. The group of operations 525 may be a group of the trash DB corresponding to a group of the media DB in which the number in operations 520 is not a positive number. In a case where there are no files and/or directories deleted within a specific group, the number of operations 520 may be 0. In the case, the processor may remove records corresponding to the specific group, from the trash DB. Similarly, when the two-dimensional array corresponding to the media DB does not include a positive number (e.g., in elements corresponding to the second row of Table 1), the processor may delete all records of the trash DB.

Referring to FIG. 5, in operation 530, according to an embodiment, the processor of the electronic device may synchronize the media DB, by comparing the media DB and the trash DB based on each of the groups. Comparison between the media DB and the trash DB may be performed, based on a list of a plurality of records (or files corresponding to the plurality of records) filtered by an attribute (e.g., an attribute with a name "is_trashed") to indicate deletion in the media DB. The processor may synchronize the media DB and the trash DB, by comparing the list and the trash DB. Operation 530 may be performed on groups with positive numbers by a two-dimensional array (e.g., two-dimensional array having the first row and the second row of Table 1 as elements) corresponding to the media DB. In response to the number of operations 520, which is a positive number, the processor may perform synchronization of groups (or sections) of the media DB and the trash DB corresponding to the positive number. The processor performing operation 530 may perform operations 532 and 534 for each of the groups. When the number of files and/or directories having the attribute indicated as deleted is the same in a specific group of the media DB and a group of the trash DB corresponding to the specific group, the processor may not perform operations 532 and 534, or may bypass the operations.

Referring to FIG. 5, in operation 532, according to an embodiment, the processor of the electronic device may obtain one or more index values corresponding to the file and/or the directory having the attribute indicated as deleted, from records of the media DB included in a specific group. For example, the processor may search the media DB for the n group, based on a character string of "SELECT GROUP_CONCAT(_id) FROM files WHERE is_trashed=1 AND _id >= (512×(n-1)) AND _id < (512×n)". The "(512×(n-1)" and the "(512×n)" of the character string may be replaced with numerical values to which n is put. The "is_trashed=1" of the character string may indicate a condition for searching one or more records having a designated value (e.g., a designated value indicating deletion of a file and/or directory) as an attribute (e.g., an attribute indicating deletion of a file and/or a directory) with a name of "is_trashed". The "GROUP _CONCAT(_id)" of the character string may instruct to return a character string, which is concatenated with each other, based on a delimiter (e.g., comma and/or semicolon) in which index values (e.g., column and/or attribute having a name of "_id") of one or more records searched by the condition are designated. The processor may obtain the character string including index values of one or more records corresponding to a file and/or a directory having the attribute indicated as deleted, among records of the media DB included in the n group, by using a query including the exemplified character string. For example, when records having index values of 1, 3, 4, and 5 are searched, the processor may obtain a character string of "1, 3, 4, 5".

Referring to FIG. 5, in operation 534, according to an embodiment, the processor of the electronic device may remove, among records of the trash DB included in a specific group, a record corresponding to a file and/or a directory having an index value different from one or more index values obtained based on operation 532. For example, the processor may perform an operation for removing one or more records in a trash DB for the trash DB (or table of the trash DB) having a name of "local", by using a character string of "DELETE FROM local WHERE _id NOT IN ?". The "DELETE" of the character string may be a command code of SQL indicating removal of at least one record filtered by a condition written after "WHERE". The condition "_id NOT IN ?" included in the character string may instruct to search a record having an index value different from index values included in "?" among records of the trash DB. The "?" of the condition "_id NOT IN ?" may be replaced with index values (or a character string in which the index values are associated with each other) obtained based on operation 532.

For example, when a result (e.g., records having index values of 1, 3, 4, and 5) of accessing the media DB is searched based on the character string of "SELECT GROUP _CONCAT(_id) FROM files WHERE is_trashed=1 AND _id >= (512×(n-1)) AND _id < (512×n)" described in operation 532, the processor obtaining the character string of "1,3,4,5" may insert the result (e.g., the character string of "1,3,4,5") into the "?" of a condition of the character string "_id NOT IN ?". In the example, based on a single query, the processor may remove, in the trash DB, a record having an index value different from one or more index values obtained based on operation 532, in a lump. Since accessing to the trash DB based on a single query, the processor may ensure atomicity and/or isolation of the trash DB, while removing one or more records of the trash DB.

As described above, among files and/or directories associated with the trash DB based on the operations of FIG. 5, a file and/or a directory different from the file and/or the directory indicated as deleted may be disassociated from the trash DB. According to an embodiment, the processor may cause the trash DB to include only records corresponding to files and/or directories indicated as deleted by the media DB, by periodically performing the operations of FIGS. 4 and 5.

For example, records of the trash DB may be associated with the file and/or the directory indicated as deleted. The processor may check which software application was executed to delete the file and/or the directory associated with the trash DB, by using the information of the trash DB. For example, independent of which software application was executed to delete the file and/or the directory, the processor may support accessing the file and/or the directory indicated as deleted using the trash DB. That is, the trash DB may enable access to the deleted file and/or directory regardless of the software application which was used to delete the file and/or directory.

For example, while executing a specific software application, the processor may display a screen (e.g., the first screen 130 to the third screen 150 of FIG. 1) including a file and/or a directory indicated as deleted by another software application. Based on or using the screen, instead of accessing recycle bins corresponding to each of the software applications individually, the user may access an integrated recycle bin shared between the software applications based on the trash DB, by executing different software applications. That is, the user may access an integrated recycle bin which contains the files and/or directories which have been deleted from a plurality of different software applications. In this way, the user does not need to execute each software application individually to access and manage deleted contents. Using the integrated recycle bin, the electronic device may support efficient management of memory (e.g., the memory 215 of FIG. 2).

Hereinafter, an exemplary operation of an electronic device for managing a file and/or a directory deleted based on different software applications, based on a designated directory, will be described with reference to FIGS. 6 and/or 7. That is, a method of an electronic device for managing a designated directory containing files/directories deleted from a plurality of different software applications is provided.

FIG. 6 illustrates an exemplary structure of a directory managed by an electronic device, according to an embodiment. The electronic device 101 and/or the processor 210 of FIGS. 1 and 2 may perform an operation of an electronic device described with reference to FIG. 6. The operation of the electronic device of FIG. 6 may be associated with the operation 320 of FIG. 3. The operation of FIG. 6 may be performed by the electronic device executing the trash provider 250 of FIG. 2.

Referring to FIG. 6, a path of an exemplary file and/or an exemplary directory stored in a designated directory managed based on, in relation to or during the execution of a trash provider is illustrated. In an embodiment, the designated directory may have a name of ".Trash". The dot "." included in the name may be a prefix indicating that the designated directory is a hidden directory. The processor identifying the prefix may refrain from displaying the designated directory on a display. The processor executing the trash provider may identify one or more files (e.g., a file 650 having a name of "File1") and/or directories (e.g., a directory 640 having a name of "Dir1" and/or a directory 660 having a name of "Dir2") moved into the designated directory based on a software application, by scanning the designated directory. Based on the identified files and/or directories, the processor may manage a trash DB (e.g., the trash DB 252 of FIG. 2). The software application may include one or more software applications classified into the application layer 270 of FIG. 2. In response to a user input to delete a file and/or a directory (e.g., initial input based on a two-stage scheme), the processor executing the software application may move or copy a file and/or a directory designated by the user input to a designated directory.

In an embodiment, the file and/or the directory moved to the designated directory of the trash provider may have a path including identifiable information based on execution of the trash provider. For example, based on a path of the file and/or the directory within the designated directory, the processor may identify at least one of a past path of the file and/or the directory before deletion, a time when the file and/or the directory were deleted, and a software application executed to delete the file and/or the directory. For example, text indicating the past path, the time, and/or the software application may be included in a character string representing a path of the file and/or the directory stored in a designated directory. After moving the file and/or the directory to the designated directory, the processor executing a software application different from the trash provider may execute or request a function of the trash provider for scanning the designated directory. The processor executing the function may extract or identify the above-described information, by perform parsing with respect to the path of one or more files and/or directories stored in the designated directory.

In an embodiment, the processor may store information obtained from the path of the file and/or the directory stored in the designated directory, in the trash DB. In the trash DB, a record corresponding to a file and/or a directory may have the column and/or the attribute as illustrated in Table 3.

**[Table 3]**

| Name of column and/or attribute | Description |
|---|---|
| _id | Index value uniquely assigned to a record |
| _data | Path of a file and/or a directory corresponding to a record, within a designated directory |
| original_path | Path of a file and/or a directory before deletion (or path to which the file and/or the directory will be restored) |
| parent | Default value is a designated numerical value (e.g., 0) Exceptionally, index value (_id) of a record corresponding to the directory is assigned, in record corresponding to a file and/or sub-directory in the directory deleted based on a software application |
| volume_name | Value indicating whether it was stored in internal memory or external memory |
| _size | Size of file |
| mime_type | Character string indicating MIME type of file (e.g., "image/jpg") |
| title | Name of file and/or directory excluding extension |
| _display_name | Name displayed on display, including extension |
| media_type | Numeric value indicating the type of file and/or directory corresponding to record |
| | (e.g., 0 for regular file, 1 for image file, 3 for audio file, 4 for video file) |
| date_expires | Expiration date when the file and/or directory corresponding to the record is preserved within a designated directory, and/or date when the file and/or the directory will be permanently deleted (e.g., date after a preset days (e.g., 31 days) from date assigned to an attribute of name of "date_deleted") |
| date_deleted | Date when the file and/or the directory corresponding to the record was deleted |
| width | When an image file and/or a video file corresponds to a record, width of the image file and/or the video file |
| height | When an image file and/or a video file corresponds to a record, height of the image file and/or the video file |
| orientation | When an image file and/or a video file corresponds to a record, orientation (e.g., angle) of the image file and/or the video file |
| orientation_tag | When an image file and/or a video file corresponds to a record, orientation of the image file and/or the video file (e.g., portrait mode and/or landscape mode) |
| user_id | ID of a user performing an initial input for the file and/or the directory corresponding to the record |
| delete_package_name | Package name of the software application executed to delete the file and/or the directory corresponding to the record |
| datetaken | When an audio file (e.g., music file) corresponds to the record, date on which the audio file was recorded |
| duration | When a video file corresponds to the record, the total playback time of the video file |
| recordingtype | When an audio file corresponds to the record, a value indicating the type of the audio file |
| generation_modified | Value indicating the number of times the file and/or directory corresponding to the record has been changed |

Referring to FIG. 6, in the designated directory, a file and/or a directory deleted by a user input for deletion may be stored in a directory 630 with a name of a designated character string (e.g., ".!%#@$"). The directory 630 may be referred to as a separator directory. The processor may check the deleted file and/or directory by searching the directory 630 having the designated character string in the designated directory. For example, a file and/or a directory directly deleted by the user may be stored in the directory 630 having a designated character string. Referring to FIG. 6, sub-directories (e.g., directories 640 and 660) and/or a file (e.g., a file 650) stored in the directory 630 may be the file and/or the directory directly deleted by the user. For example, a sub-file (e.g., a file 642 with a name of "SubFile1" and/or a file 644 with a name of "SubFile2") included in the sub-directories may be a file stored in the directory directly deleted by the user.

Referring to FIG. 6, the directory 630, which stores a file 650 and/or directories 640 and 660 and has a name of a designated character string may be stored in one or more directories 620 generated in series to represent a path in which the file 650 and/or the directories 640 and 660 were stored before deletion. When a plurality of directories 620 are generated to represent the path, the plurality of directories 620 may be hierarchically generated based on a relationship between the sub-directory. According to an embodiment, the processor may identify a path in which the file 650 was stored before deletion, from a portion before the directory 630 having a designated character string within a character string indicating the path of the file 650. The path represented by one or more directories 620 may be stored in a column having a name of "original_path" in Table 3.

Referring to FIG. 6, the one or more directories 620, which are sub-directories of a designated directory, may be stored in directories 610 having a package name of a software application that was executed to delete the file 650 and/or the directories 640 and 660, and a name indicating a time when the files 650 and/or the directories 640 and 660 were deleted. In an embodiment identifying the file 650 stored in a designated directory, the processor may identify a timing or time at which the file 650 was deleted (e.g., timestamp, Unix epoch, and/or Unix time) and/or the package name of the software application that was executed to delete the file 650, from names of the directories 610 included in a portion after a portion (e.g., "/storage/emulated/0/Android/.Trash/") corresponding to a path of the designated directory in a character string indicating the path of the file 650.

According to an embodiment, the processor may obtain a file (or directory) that is deleted based on execution of the specific software application and information on the files (or the directory), by accessing a sub-directory based on a package name of a specific software application, based on or during the execution of a trash provider, in the designated directory. Based on identifying the file 650 stored in the sub-directory, the processor may identify, from one or more directories 620 indicated by the path of the file 650, a path in which the file 650 was stored before deletion. The processor may obtain the path from the parent directory (or, in a character string representing the path of the file 650, a portion before (or prior to) the designated character string) of the directory 630 having a name of a designated character string. The processor may identify a timing or time at which the file 650 was deleted and/or a software application that was executed for deleting the file 650, from a portion before a portion corresponding to the path, in a character string representing the path of the file 650.

In an embodiment, the processor may store the path, the timing, and/or the software application, which are identified from the character string representing the path of the file 650, in a record corresponding to the file 650. For example, the path, the timing, and the package name of the software application may be stored in each of columns the names "original_path", "date_deleted", and "delete_package_name" in the record, based on Table 3.

For example, the processor executing a software application different from the trash provider may generate sub-directories (e.g., directories 610 and 620) described with reference to FIG. 6 within a designated directory managed by the trash provider, in response to a user input instructing deletion of the directory 640, and then generate the directory 630 having a name of a designated character string (.!%#@$) within the lowest directory of the generated sub-directories. The processor may move the directory 640 designated by the user input and files 642 and 644 stored in the directory 640, to the directory 630. After moving the directory 640 to the directory 630, the processor may execute the trash provider based on directories 610 including the package name of the software application. In the example, the processor executing the trash provider may check the directory 640 by scanning a sub-directory of the directories 610. In response to check of the directory 640, the processor may add a record corresponding to the directory 640 into the trash DB, in order to associate the trash DB and the directory 640.

Hereinafter, an operation of an electronic device for scanning a designated directory including an exemplary file and/or directory will be described with reference to FIG. 7.

FIG. 7 illustrates an operation of (i.e. method performed by) an electronic device that scans an exemplary directory storing one or more files and/or sub-directories. The electronic device 101 and/or the processor 210 of FIGS. 1 and 2 may perform an operation of an electronic device described with reference to FIG. 7. The operation of the electronic device of FIG. 7 may be associated with the operation 320 of FIG. 3. The operation of FIG. 7 may be performed by an electronic device executing the trash provider 250 of FIG. 2.

Referring to FIG. 7, according to an embodiment, an exemplary tree structure of a designated directory (e.g., a directory having a path of "/storage/emulated/0/Android/.Trash/") detected by a processor of an electronic device is illustrated. For example, at a specific time (e.g., Unix time of "123456789"), based on execution of a software application with a package name "com.sec.android.app.myfiles", the processor that deletes a directory 740 with a name of "Album1", an image file 750 with a name of "20230808_12345.jpg", and a directory 760 with a name of "Album2" may generate directories 710 and 720 having text representing the package name and the timing, within the designated directory. The processor may move directories 740 and 760 and the image file 750 to a separator directory 730 in the directories 710 and 720.

According to an embodiment, the processor of the electronic device may scan a designated directory based on execution of the trash provider. For example, the processor may scan sub-directories and/or files of the designated directory, based on an algorithm such as depth-first search (DFS). Based on the scan, the processor may identify the files 750, the directories 740 and 760, and sub-files (e.g., files 742 and 744) of the directories 740 and 760, which are indicated as deleted in the designated directory. In an embodiment, the processor may generate or add, in the trash DB, five records corresponding to each of files 742, 744, and 750 and directories 740 and 760 stored in the separator directory 730. The processor may determine a column and/or attribute of the records based on the operation described with reference to FIG. 6. For example, in the trash DB, a record corresponding to the file 750 may have a column and/or attribute illustrated in Table 4.

**[Table 4]**

| | Value |
|---|---|
| _id | 1 |
| _data | /storage/emulated/0/Android/.Trash/ com.sec.android.app.myfiles/123456789/storage/emulated/0/ DCIM/Camera/.!%#@$/**20230808_12345.jpg** |
| original_path | /storage/emulated/0/DCIM/Camera/20230808_12345.jpg |
| parent | 0 |
| volume_name | external_primary |
| _size | 328 Kbytes |
| mime_type | image/jpg |
| media_type | 1 |
| date_expires | 123456819 ( = 123456789 + 30 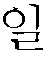 ) |
| date_deleted | 123456789 |
| delete_package_name | com.sec.android.app.myfiles |
| 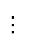 | |

Referring to Table 4, a record corresponding to the file 750 directly stored in the separator directory 730 may have a designated value (e.g., "0") indicating a file and/or directory directly stored in the separator directory 730, as an attribute with a name of "parent". Referring to Table 4, the processor executing the trash provider may store values indicating a path in which the file 750 was deleted and a software application that was executed for deletion of the file 750, within the record, from names of the parent directories (e.g., directories 710 and 720) of the separator directory 730 in which the file 750 is stored. According to an embodiment, the processor of the electronic device may add a record corresponding to the directory 740 and having attributes illustrated in Table 5, within the trash DB.

**[Table 5]**

| Name of column and/or attribute | Description |
|---|---|
| _id | 2 |
| _data | /storage/emulated/0/Android/.Trash/ com.sec.android.app.myfiles/123456789/storage/emulated/0/ DCIM/Camera/. !%#@$/Album 1 |
| original_path | /storage/emulated/0/DCIM/Camera/Album 1 |
| Parent | **0** |
| 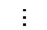 | |

Referring to Table 5, a path before deletion, including the name of the directory 740, may be stored in an attribute having a name of "original_path". The path before deletion may be identified by one or more directories 720 in which the separator directory 730 is stored.

In an embodiment, the processor identifying the file 742 stored in the directory 740 within the separator directory 730 may add or generate a record corresponding to the file 742 in the trash DB. The record of the trash DB corresponding to the file 742 may have an attribute illustrated in Table 6.

**[Table 6]**

| Name of column and/or attribute | Description |
|---|---|
| _id | 3 |
| _data | /storage/emulated/0/Android/.Trash/ com.sec.android.app.myfiles/123456789/storage/emulated/0/ DCIM/Camera/.!%#@$/Album1/20220101.jpg |
| original_path | /storage/emulated/0/DCIM/Camera/Album1/20220101.jpg |
| parent | 2 |
| volume_name | external_primary |
| media_type | 1 |
| 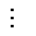 | |

Referring to Table 6, in a record corresponding to the file 742, an index value (e.g., 2) of the record corresponding to a parent directory (e.g., the directory 740) in which the file 742 is stored may be stored in a column with a name of "parent". Based on the column, the processor may check that the file 742 is a sub-file of the directory 740. Similarly, the processor identifying the file 744 in the directory 740 may store a record with an attribute in Table 7, within the trash DB, as a record corresponding to the file 744.

**[Table 7]**

| Name of column and/or attribute | Description |
|---|---|
| _id | 4 |
| _data | /storage/emulated/0/Android/.Trash/ com.sec.android.app.myfiles/123456789/storage/emulated/0/ |
| | DCIM/Camera/.!%#@$/Album1/20220102.jpg |
| original_path | /storage/emulated/0/DCIM/Camera/Album1/20220102.jpg |
| parent | **2** |
| volume_name | external_primary |
| media_type | 1 |
| 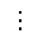 | |

According to an embodiment, when identifying the directory 760 in the separator directory 730, the processor of the electronic device may add a record having values such as those of Table 8 as attributes in the trash DB.

**[Table 8]**

| Name of column and/or attribute | Description |
|---|---|
| _id | 5 |
| _data | /storage/emulated/0/Android/.Trash/ com.sec.android.app.myfiles/123456789/storage/emulated/0/ DCIM/Camera/.!%#@$/Album2 |
| original_path | /storage/emulated/0/DCIM/Camera/Album2 |
| parent | 0 |
| volume_name | external_primary |
| 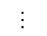 | |

In an embodiment in which records based on Tables 4 to 8 are stored in the trash DB, the processor may perform filtering on the records, based on execution of a software application accessing the trash DB. For example, the processor executing the file browser application 276 of FIG. 2 may search for records having a value (e.g., "0") designated in the attribute having the name of "parent", in order to search for all files and/or directories that were deleted. In the example, the processor may display a screen (e.g., the third screen 150 of FIG. 1) including visual objects corresponding to each of the file 750 and the directories 740 and 760, based on records corresponding to the file 750 and the directories 740 and 760.

For example, in order to search all image files that were deleted, the processor executing the gallery application 272 of FIG. 2 may search records with a character string (e.g., "img/jpg" and/or "img/jpeg") representing an image file in an attribute having a name of "mime_type", or search records with a designated numerical value (e.g., "1") corresponding to the image file in an attribute having a name of "media _type". In the example, the processor may display at least a portion of a list including files 742, 744, and 750 (e.g., the first screen 130 of FIG. 1).

As described above, according to an embodiment, the processor of the electronic device may update the trash DB by scanning a designated directory managed based on a designated rule for setting a path. The processor executing the trash provider may perform parsing a path of a file and/or a directory stored in the designated directory, based on the designated rule. Based on the parsing, the processor may store a record having the column and/or the attribute described with reference to Table 3 within the trash DB.

The operation of scanning the designated directory described above with reference to FIGS. 6 to 7 may be performed, in response to corruption and/or loss of a database managed by the trash provider, like the trash DB. For example, the processor may restore the trash DB, by scanning the designated directory based on the above-described operation with reference to FIGS. 6 to 7.

Hereinafter, an exemplary operation of an electronic device that manages a trash DB and/or a designated directory based on a function supported for transmission of information, among functions supported by an operating system, such as a content provider, will be described with reference to FIG. 8.

FIG. 8 illustrates an exemplary operation of an electronic device receiving a user input for deleting a file and/or directory. The electronic device 101 and/or the processor 210 of FIGS. 1 and 2 may perform an operation of an electronic device described with reference to FIG. 8. The operation of the electronic device of FIG. 8 may be associated with the trash provider 250 of FIG. 2. The software application 802 of FIG. 8 may include a software application installed in the electronic device, which is distinguished from the trash provider 250.

Referring to FIG. 8, in operation 810, a processor of an electronic device executing a software application 802 may generate a content resolver object associated with deletion of a file and/or a directory. The content resolver object may be an object defined for execution of a content provider based on the software application 802. Operation 810 may be performed in response to a user input instructing deletion of a file and/or directory, which is identified based on the software application 802. In response to the user input, the processor may move the file and/or the directory to a designated directory (e.g., a directory having a name of ".Trash" described above with reference to FIGS. 6 to 7) managed by the trash provider 250 and then perform operation 810. Moving a file and/or directory designated by a user input to a designated directory may include generating one or more sub-directories including the separator directory described with reference to FIGS. 6 to 7, within the designated directory, and include moving the file and/or the directory to the generated one or more sub-directories.

Referring to FIG. 8, in operation 820, the processor of the electronic device executing the software application 802 may execute a function of the trash provider 250 designated by the content resolver object. For example, the content resolver object may include a character string indicating a function of the trash provider 250 to be executed based on the content resolver object. The character string may have a format of a uniform resource indicator (URI). For example, a content resolver object including a character string of "content://sectrash/files" may be generated to perform update (e.g., the operation 320 of FIG. 3 and/or the operation of the electronic device described above with reference to FIGS. 6 to 7) of the trash DB (e.g., the trash DB 252 of FIG. 2) based on the trash provider 250.

For example, a content resolver object including a character string of "content://sectrash/files/trash" may be generated to perform move of a file and/or a directory to a designated directory of the trash provider 250 and update of the trash DB. The content resolver object may include a designated character string indicating a function for inserting information into the trash DB, such as "ContentResolver#insert ". The content resolver object may include information (e.g., values to be stored in at least one column described above with reference to FIG. 3) to be stored in the trash DB. Executing a function of operation 820 may include executing a content provider supported by the operating system of the electronic device.

Referring to FIG. 8, in operation 830, the processor of the electronic device executing the trash provider 250 may update the trash DB and/or the designated directory, based on the file and/or directory designated by the content resolver object. For example, the processor may check the file and/or directory moved to a designated directory based on the execution of the software application 802, by using the content resolver object. The processor may add a record corresponding to the file and/or the directory to the trash DB, by using at least one of information included in the content resolver object, the file, and/or a path of the directory. The processor executing the trash provider 250 based on the content resolver object including the character string of "content://sectrash/files" may move the file and/or the directory corresponding to the content resolver object to the designated directory.

Referring to FIG. 8, in operation 840, the processor of the electronic device executing the trash provider 250 may execute a function of the software application 802, by using a cursor object corresponding to the content resolver object. The cursor object may include a parameter and/or a flag indicating whether the trash DB and/or the designated directory has been successfully updated based on operation 830. The cursor object may be used to execution of the software application 802 as a response of the trash provider 250 with respect to operation 820. For example, a function of the software application 802 executed based on operation 840 may include a function of completing deletion of a file and/or a directory based on the cursor object. In an embodiment, operation 840 may be bypassed or omitted.

Referring to FIG. 8, in operation 850 after operations 830 and 840, the processor of the electronic device executing the trash provider 250 may provide a list based on a trash DB and/or a designated directory updated based on operation 830 to a software application (e.g., software application 802) installed in the electronic device. The list of operations 850 may include a file and/or a directory, which was deleted by one or more software applications installed in the electronic device. The processor may perform the operation 850, in response to a content resolver object including a designated string indicating performance of the operation 850, such as " ContentResolver#query". Based on operation 850, the processor executing another software application different from the software application 802 may display a list including the file and/or the directory of operation 810, deleted based on the software application 802. The embodiment is not limited thereto, and the processor executing the software application 802 may also display a list including the file and/or directory of the operation 810 based on the operation 850.

As described above, according to an embodiment, the electronic device may include a database (e.g., the trash DB 252 of FIG. 2) and/or a directory for integrally managing files and/or directories individually deleted by each of a plurality of software applications. In order to track and/or monitor the database and/or the directory, the electronic device may include a process (e.g., the trash provider 250 of FIG. 2) executed in a background state. That is, the electronic device provides an integrated service for managing files which have been deleted from a plurality of different software applications. In this way, a user may manage deleted files in a single location, regardless of the software applications from which the file originates.

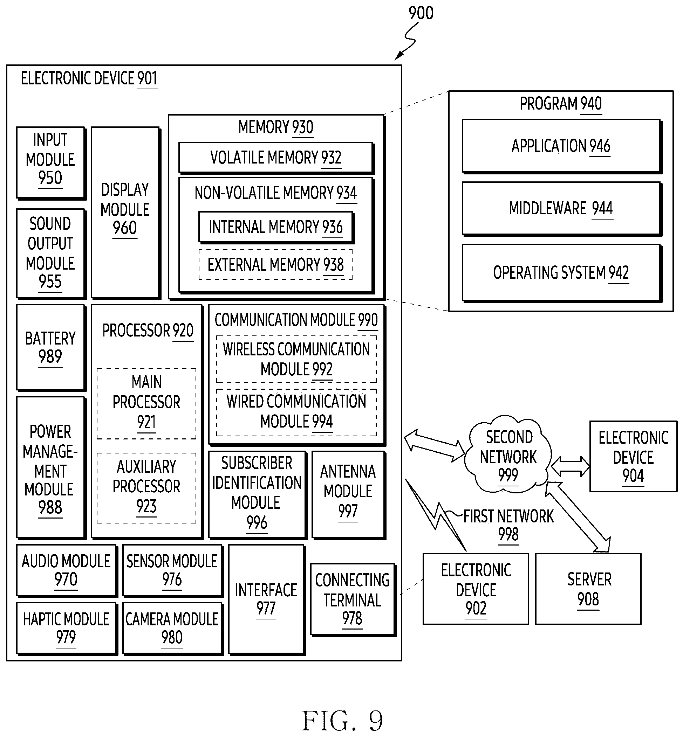

FIG. 9 is a block diagram illustrating an electronic device 901 in a network environment 900 according to various embodiments. Referring to FIG. 9, the electronic device 901 in the network environment 900 may communicate with an electronic device 902 via a first network 998 (e.g., a short-range wireless communication network), or at least one of an electronic device 904 or a server 908 via a second network 999 (e.g., a long-range wireless communication network). According to an embodiment, the electronic device 901 may communicate with the electronic device 904 via the server 908. According to an embodiment, the electronic device 901 may include a processor 920, memory 930, an input module 950, a sound output module 955, a display module 960, an audio module 970, a sensor module 976, an interface 977, a connecting terminal 978, a haptic module 979, a camera module 980, a power management module 988, a battery 989, a communication module 990, a subscriber identification module(SIM) 996, or an antenna module 997. In some embodiments, at least one of the components (e.g., the connecting terminal 978) may be omitted from the electronic device 901, or one or more other components may be added in the electronic device 901. In some embodiments, some of the components (e.g., the sensor module 976, the camera module 980, or the antenna module 997) may be implemented as a single component (e.g., the display module 960).

The processor 920 may execute, for example, software (e.g., a program 940) to control at least one other component (e.g., a hardware or software component) of the electronic device 901 coupled with the processor 920, and may perform various data processing or computation. According to an embodiment, as at least part of the data processing or computation, the processor 920 may store a command or data received from another component (e.g., the sensor module 976 or the communication module 990) in volatile memory 932, process the command or the data stored in the volatile memory 932, and store resulting data in non-volatile memory 934. According to an embodiment, the processor 920 may include a main processor 921 (e.g., a central processing unit (CPU) or an application processor (AP)), or an auxiliary processor 923 (e.g., a graphics processing unit (GPU), a neural processing unit (NPU), an image signal processor (ISP), a sensor hub processor, or a communication processor (CP)) that is operable independently from, or in conjunction with, the main processor 921. For example, when the electronic device 901 includes the main processor 921 and the auxiliary processor 923, the auxiliary processor 923 may be adapted to consume less power than the main processor 921, or to be specific to a specified function. The auxiliary processor 923 may be implemented as separate from, or as part of the main processor 921.

The auxiliary processor 923 may control at least some of functions or states related to at least one component (e.g., the display module 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). According to an embodiment, the auxiliary processor 923 (e.g., an image signal processor or a communication processor) may be implemented as part of another component (e.g., the camera module 980 or the communication module 990) functionally related to the auxiliary processor 923. According to an embodiment, the auxiliary processor 923 (e.g., the neural processing unit) may include a hardware structure specified for artificial intelligence model processing. An artificial intelligence model may be generated by machine learning. Such learning may be performed, e.g., by the electronic device 901 where the artificial intelligence is performed or via a separate server (e.g., the server 908). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 930 may store various data used by at least one component (e.g., the processor 920 or the sensor module 976) of the electronic device 901. The various data may include, for example, software (e.g., the program 940) and input data or output data for a command related thereto. The memory 930 may include the volatile memory 932 or the non-volatile memory 934.

The program 940 may be stored in the memory 930 as software, and may include, for example, an operating system (OS) 942, middleware 944, or an application 946.

The input module 950 may receive a command or data to be used by another component (e.g., the processor 920) of the electronic device 901, from the outside (e.g., a user) of the electronic device 901. The input module 950 may include, for example, a microphone, a mouse, a keyboard, a key (e.g., a button), or a digital pen (e.g., a stylus pen).

The sound output module 955 may output sound signals to the outside of the electronic device 901. The sound output module 955 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 960 may visually provide information to the outside (e.g., a user) of the electronic device 901. The display module 960 may include, for example, a display, a hologram device, or a projector and control circuitry to control a corresponding one of the display, hologram device, and projector. According to an embodiment, the display module 960 may include a touch sensor adapted to detect a touch, or a pressure sensor adapted to measure the intensity of force incurred by the touch.

The audio module 970 may convert a sound into an electrical signal and vice versa. According to an embodiment, the audio module 970 may obtain the sound via the input module 950, or output the sound via the sound output module 955 or a headphone of an external electronic device (e.g., an electronic device 902) directly (e.g., wiredly) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. According to an embodiment, the sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device (e.g., the electronic device 902) directly (e.g., wiredly) or wirelessly. According to an embodiment, the interface 977 may include, for example, a high definition multimedia interface (HDMI), a universal serial bus (USB) interface, a secure digital (SD) card interface, or an audio interface.

A connecting terminal 978 may include a connector via which the electronic device 901 may be physically connected with the external electronic device (e.g., the electronic device 902). According to an embodiment, the connecting terminal 978 may include, for example, an HDMI connector, a USB connector, a SD card connector, or an audio connector (e.g., a headphone connector).

The haptic module 979 may convert an electrical signal into a mechanical stimulus (e.g., a vibration or a movement) or electrical stimulus which may be recognized by a user via his tactile sensation or kinesthetic sensation. According to an embodiment, the haptic module 979 may include, for example, a motor, a piezoelectric element, or an electric stimulator.

The camera module 980 may capture a still image or moving images. According to an embodiment, the camera module 980 may include one or more lenses, image sensors, image signal processors, or flashes.

The power management module 988 may manage power supplied to the electronic device 901. According to an embodiment, the power management module 988 may be implemented as at least part of, for example, a power management integrated circuit (PMIC).

The battery 989 may supply power to at least one component of the electronic device 901. According to an embodiment, the battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the application processor (AP)) and supports a direct (e.g., wired) communication or a wireless communication. According to an embodiment, the communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device via the first network 998 (e.g., a short-range communication network, such as Bluetooth^{™}, wireless-fidelity (Wi-Fi) direct, or infrared data association (IrDA)) or the second network 999 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The wireless communication module 992 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 992 may support a high-frequency band (e.g., the mmWave band) to achieve, e.g., a high data transmission rate. The wireless communication module 992 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 992 may support various requirements specified in the electronic device 901, an external electronic device (e.g., the electronic device 904), or a network system (e.g., the second network 999). According to an embodiment, the wireless communication module 992 may support a peak data rate (e.g., 20Gbps or more) for implementing eMBB, loss coverage (e.g., 964dB or less) for implementing mMTC, or U-plane latency (e.g., 0.5ms or less for each of downlink (DL) and uplink (UL), or a round trip of 9ms or less) for implementing URLLC.

The antenna module 997 may transmit or receive a signal or power to or from the outside (e.g., the external electronic device) of the electronic device 901. According to an embodiment, the antenna module 997 may include an antenna including a radiating element composed of a conductive material or a conductive pattern formed in or on a substrate (e.g., a printed circuit board (PCB)). According to an embodiment, the antenna module 997 may include a plurality of antennas (e.g., array antennas). In such a case, at least one antenna appropriate for a communication scheme used in the communication network, such as the first network 998 or the second network 999, may be selected, for example, by the communication module 990 (e.g., the wireless communication module 992) from the plurality of antennas. The signal or the power may then be transmitted or received between the communication module 990 and the external electronic device via the selected at least one antenna. According to an embodiment, another component (e.g., a radio frequency integrated circuit (RFIC)) other than the radiating element may be additionally formed as part of the antenna module 997.

According to various embodiments, the antenna module 997 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 901 and the external electronic device 904 via the server 908 coupled with the second network 999. Each of the electronic devices 902 or 904 may be a device of a same type as, or a different type, from the electronic device 901. According to an embodiment, all or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 901. The electronic device 901 may provide the outcome, with or without further processing of the outcome, as at least part of a reply to the request. To that end, a cloud computing, distributed computing, mobile edge computing (MEC), or client-server computing technology may be used, for example. The electronic device 901 may provide ultra low-latency services using, e.g., distributed computing or mobile edge computing. In another embodiment, the external electronic device 904 may include an internet-of-things (IoT) device. The server 908 may be an intelligent server using machine learning and/or a neural network. According to an embodiment, the external electronic device 904 or the server 908 may be included in the second network 999. The electronic device 901 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 940) including one or more instructions that are stored in a storage medium (e.g., internal memory 936 or external memory 938) that is readable by a machine (e.g., the electronic device 901). For example, a processor (e.g., the processor 920) of the machine (e.g., the electronic device 901) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. The electronic device 901 of FIG. 9 may be an example of the electronic device 101 described with reference to FIGS. 1 and/or 2.

In an embodiment, a method for integrally managing a file and/or a directory individually deleted by software applications may be required. As described above, according to an embodiment, an electronic device (e.g., the electronic device 101 of FIG. 1 and/or the electronic device 901 of FIG. 9) may comprise a display (e.g., the display 110 of FIG. 1), memory (e.g., memory 215 of FIG. 2) storing instructions of a plurality of software applications, and a processor (e.g., the processor 210 of FIG. 2). The processor may be configured to, when the instructions are executed, cause the electronic device to display a first screen based on execution of a first software application among the plurality of software applications on the display. The processor may be configured to, when the instructions are executed, cause the electronic device to receive a user input for browsing information indicated as deleted within the memory, based on the first screen. The processor may be configured to, when the instructions are executed, cause the electronic device to, in response to the user input, obtain the information including a file (e.g., the file 650 of FIG. 6 and/or the file 750 of FIG. 7) indicated as deleted based on a third software application different from the first software application, by using a second database (e.g., the trash DB 252) managed by a second software application (e.g., the trash provider 250 of FIG. 2) and synchronized with a first database (e.g., the media DB 262) accessible by the plurality of software applications. The processor may be configured to, when the instructions are executed, cause the electronic device to display, on the display, a second screen (e.g., the first screen 130, the second screen 140, and/or the third screen 150 of FIG. 1) including a visual object corresponding to the file indicated as deleted based on the third software application, based on the information. According to an embodiment, the electronic device may integrally manage files and/or directories that were deleted based on different software applications.

For example, the processor may be configured to, when the instructions are executed, cause the electronic device to obtain a list of a plurality of files filtered by an attribute to instruct deletion in the first database, based on the execution of the second software application. The processor may be configured to, when the instructions are executed, cause the electronic device to synchronize the first database and the second database by comparing the second database and the list.

For example, the processor may be configured to, when the instructions are executed, cause the electronic device to obtain the number of files indicated as deleted by the attribute within a section, in the first database, based on a section of index values for distinguishing files associated with the first database. The processor may be configured to, when the instructions are executed, cause the electronic device to perform synchronization of the first database and the second database based on the section, in response to the number, which is a positive number.

For example, the processor may be configured to, when the instructions are executed, cause the electronic device to disassociate, among files associated with the second database, a file that is different from files included in the list from the second database.

For example, the processor may be configured to, when the instructions are executed, cause the electronic device to obtain the list, by searching one or more records for which a designated value to instruct deletion is assigned to the attribute, in the first database managed by a media provider (e.g., the media provider 260 of FIG. 2).

For example, the processor may be configured to, when the instructions are executed, cause the electronic device to access the first database, by using the media provider for managing media content including at least one of an image file, a video file, or an audio file stored in the memory.

For example, the processor may be configured to, when the instructions are executed, cause the electronic device to obtain the information including the file by accessing a sub-directory (e.g., the directories 610 of FIG. 6 and/or the directories 710 of FIG. 7) based on a package name of the third software application, in a directory managed by the second software application.

For example, the processor may be configured to, when the instructions are executed, cause the electronic device to obtain the second path where the file was stored from a character string indicating a first path of the file, based on identifying the file stored in the sub-directory.

For example, the processor may be configured to, when the instructions are executed, cause the electronic device to obtain the second path within the character string from a portion before a designated string indicating a deleted file or directory.

For example, the processor may be configured to, when the instructions are executed, cause the electronic device to execute a content provider based on a designated uniform resource indicator (URI) instructing deletion of the file, in response to another user input for deleting the file, which is received through the second screen.

As described above, according to an embodiment, a method of an electronic device including a display, memory, and a processor is provided. The method may comprise displaying a first screen based on execution of a first software application among a plurality of software applications, which are stored in the memory, on the display. The method may comprise, based on the first screen, receiving a user input for browsing information indicated as deleted within the memory. The method may comprise, in response to the user input, obtaining the information including a file indicated as deleted based on a third software application different from the first software application, by using a second database managed by a second software application and synchronized with a first database accessible by the plurality of software applications. The method may comprise, based on the information, displaying, on the display, a second screen including a visual object corresponding to the file indicated as deleted based on the third software application.

For example, the obtaining may include obtaining the information including the file, by accessing the second database, synchronized with the first database managed by the media provider.

For example, the method may comprise obtaining a list of a plurality of files filtered by an attribute to instruct deletion in the first database, based on the execution of the second software application. The method may comprise performing synchronization of the first database and the second database by comparing the second database and the list.

For example, the performing synchronization may comprise obtaining the number of files indicated as deleted by the attribute within a section, in the first database, based on a section of index values for distinguishing files associated with the first database. The method may comprise performing synchronization of the first database and the second database based on the section, in response to the number, which is a positive number.

For example, the performing synchronization may comprise disassociating, among files associated with the second database, a file that is different from files included in the list from the second database.

For example, the obtaining may comprise accessing the first database, by using the media provider for managing media content including at least one of an image file, a video file, or an audio file stored in the memory.

For example, the obtaining may comprise obtaining the information including the file by accessing a sub-directory, based on a package name of the third software application, in a directory managed by the second software application.

For example, the obtaining the information may comprise obtaining the second path in which the file was stored, in a character string indicating a first path of the file stored in the sub-directory, from a portion before the designated character string representing the deleted file or directory.

For example, the method may comprise executing a content provider based on a designated uniform resource indicator (URI) instructing deletion of the file, in response to another user input for deleting the file, which is received through the second screen.

As described above, according to an embodiment, a non-transitory computer readable storage medium including instructions is provided. The instructions may be configured to, when executed by an electronic device comprising a display, memory and a processor, cause the electronic device to, while displaying a first screen based on execution of a first software application among a plurality of software applications, which are stored in the memory, on the display, identify a user input for browsing information indicated as deleted within the memory. The instructions may be configured to, when executed by the electronic device, cause the electronic device to, in response to the user input, obtain the information including a file indicated as deleted based on a third software application different from the first software application, by using a second database managed by a second software application corresponding to the instructions and synchronized with a first database accessible by the plurality of software applications. The instructions may be configured to, when executed by the electronic device, cause the electronic device to provide the information to the first software application, in order to display a second screen including a visual object corresponding to the file indicated as deleted based on the third software application.

As described above, according to an embodiment, an electronic device may comprise a display, memory storing instructions of a plurality of software applications including a first software application and a second software application, and a processor. The instructions, when executed by the processor, may cause the electronic device to receive an input for accessing a first trash directory of the first software application through an execution screen of the first software application. The instructions, when executed by the processor, may cause the electronic device to, in response to the input, identify at least one file, which is included in a category accessible by the first software application and is included in a second trash directory different from the first trash directory, by executing a second software application that manages a first database including information on files classified into any one of trash directories of the plurality of software applications. The instructions, when executed by the processor, may cause the electronic device to display at least one visual object corresponding to the identified at least one file, within the execution screen. The first database may store files classified into the trash directories of the plurality of software applications, and may be updated using a list obtained from a second database storing states of files in the memory that are added or changed by the plurality of software applications.

For example, the instructions, when executed by the processor, may cause the electronic device to obtain the list of the files, which are filtered by an attribute for indicating a file classified into a trash directory, within the second database, based on execution of the second software application. For example, the instructions, when executed by the processor, may cause the electronic device to perform synchronization of the first database and the second database by comparing the list and the first database.

For example, the instructions, when executed by the processor, may cause the electronic device to obtain a number of files indicated as classified into a trash directory by the attribute, in each of groups of the files in the memory distinguished by index values of the second database. The instructions, when executed by the processor, may cause the electronic device to perform the synchronization of the first database and the second database by using the list of the files associated with a group having the number, which is a positive number.

For example, the instructions, when executed by the processor, may cause the electronic device to disassociate, among files associated with the first database, a file that is different from files included in the list from the first database.

For example, the instructions, when executed by the processor, may cause the electronic device to obtain the list of the files, by executing a third software application for managing information in the second database associated with an image, video, or audio included in the files in the memory.

For example, the instructions, when executed by the processor, may cause the electronic device to identify the at least one file included in the second trash directory, by using the first database including records corresponding to files classified into the trash directories of the plurality of software applications, respectively.

For example, the instructions, when executed by the processor, may cause the electronic device to detect the files to be associated with the first database by accessing a sub directory having a package name of another software application different from the first software application, within a directory managed by the second software application.

For example, the instructions, when executed by the processor, may cause the electronic device to obtain, from a character string indicating a first path of the identified file, a second path in which the identified file was stored, based on identifying a file stored in the sub directory.

For example, the instructions, when executed by the processor, may cause the electronic device to obtain the second path within the character string from a portion before a preset character string.

For example, the instructions, when executed by the processor, may cause the electronic device to, in response to another input to delete a file that is received based on execution of the first software application, execute a content provider based on a uniform resource indicator (URI) indicating deletion of the file corresponding to the other input.

As described above, according to an embodiment, an electronic device comprise a display, memory, and a processor. The method may comprise receiving an input for accessing a first trash directory of a first software application through an execution screen of the first software application. The method may comprise, in response to the input, identifying at least one file, which is included in a category accessible by the first software application and is included in a second trash directory different from the first trash directory, by executing a second software application that manages a first database including information on files classified into any one of trash directories of a plurality of software applications including the first software application. The method may comprise displaying at least one visual object corresponding to the identified at least one file, within the execution screen. The first database may store files classified into the trash directories of the plurality of software applications, and may be updated using a list obtained from a second database storing states of files in the memory that are added or changed by the plurality of software applications.

For example, the list of the files may be obtained by executing a third software application for managing information in the second database associated with an image, video, or audio included in the files in the memory.

For example, the method may comprise obtaining the list of the files, which are filtered by an attribute for indicating a file classified into a trash directory, within the second database, based on execution of the second software application. For example, the method may comprise performing synchronization of the first database and the second database by comparing the list and the first database.

For example, the performing the synchronization may comprise obtaining a number of files indicated as classified into a trash directory by the attribute, in each of groups of the files in the memory distinguished by index values of the second database. The performing the synchronization may comprise performing the synchronization of the first database and the second database by using the list of the files associated with a group having the number, which is a positive number.

For example, the performing the synchronization may comprise disassociating, among files associated with the first database, a file that is different from files included in the list from the first database.

For example, the identifying may comprise identify the at least one file included in the second trash directory, by using the first database including records corresponding to files classified into the trash directories of the plurality of software applications, respectively.

For example, the first database may include information with respect to files, within a directory managed by the second managing application, included in a sub directory having a package name of another software application different from the first software application.

For example, the first database may include a second path where the file in the sub directory was stored. The second path, which is the information with respect to the files included in the sub directory, may be obtained from, within a character string indicating a first path of the file stored in the sub directory, a portion before a preset character string.

For example, the method may comprise, in response to another input to delete a file that is received based on execution of the first software application, executing a content provider based on a uniform resource indicator (URI) indicating deletion of the file corresponding to the other input.

As described above, according to an embodiment, a non-transitory computer readable storage medium including instructions is provided. The instructions, when executed by an electronic device comprising a display, memory and a processor, may cause the electronic device to receive an input for accessing a first trash directory of a first software application through an execution screen of the first software application. The instructions, when executed by the electronic device, may cause the electronic device to, in response to the input, identify at least one file, which is included in a category accessible by the first software application and is included in a second trash directory different from the first trash directory, by executing a second software application that manages a first database including information on files classified into any one of trash directories of the plurality of software applications. The instructions, when executed by the electronic device, may cause the electronic device to display at least one visual object corresponding to the identified at least one file, within the execution screen. The first database may store files classified into the trash directories of the plurality of software applications, and may be updated using a list obtained from a second database storing states of files in the memory that are added or changed by the plurality of software applications.

As described above, according to an embodiment, an electronic device may comprise a display, a processor, and memory storing instructions. The instructions, when executed by the processor, may cause the electronic device to display within the display a first execution screen based on execution of a first software application. The first execution screen may be configured to receive a user input for accessing a first trash directory of the first software application. The instructions, when executed by the processor, may cause the electronic device to display a second execution screen based on execution of a second software application. The second execution screen may be configured to receive a user input for accessing a second trash directory of the second software application. The instructions, when executed by the processor, may cause the electronic device to execute a first managing application configured to manage a first database, which records states of files stored in the memory according to operations performed by the first software application and the second software application, and includes files associated with a list, which are classified as included in the first trash directory and the second trash directory. The instructions, when executed by the processor, may cause the electronic device to execute a second managing application configured to manage a second database, which is updated by using a list that is obtained from the first database. The instructions, when executed by the processor, may cause the electronic device to, based on receiving, via the first execution screen, the user input for accessing the first trash directory, identify, by using the second database including information with respect to files classified as included in the first trash directory and the second trash directory, at least one file that is included in the second trash directory and is associated with a category accessible by the first software application. The instructions, when executed by the processor, may cause the electronic device to display, via the first execution screen of the first software application, at least one visual object corresponding to the identified at least one file.

For example, the instructions, when executed by the processor, may cause the electronic device to obtain the list of the files, which are filtered by an attribute for indicating a file classified into a trash directory, within the second database, based on execution of the second managing application. The instructions, when executed by the processor, may cause the electronic device to perform synchronization of the first database and the second database by comparing the list and the first database.

For example, the first database may be managed by the first managing application, which is a mediaprovider software program that is associated with an image, a video, or an audio included in the files in the memory.

For example, the second database including records respectively corresponding to files classified into trash directories of a plurality of software applications including the first software application and the second software application may be managed by the second managing application, which is a trash-directory-managing software program.

For example, the instructions, when executed by the processor, may cause the electronic device to, within a directory managed by the second managing application, detect the files to be associated with the first database by accessing a sub directory having a package name of another software application different from the first software application.

As described above, according to an embodiment, a method of an electronic device comprising a display, memory, and a processor is provided. The method may comprise displaying within the display a first execution screen based on execution of a first software application. The first execution screen may be configured to receive a user input for accessing a first trash directory of the first software application. The method may comprise displaying a second execution screen based on execution of a second software application. The second execution screen may be configured to receive a user input for accessing a second trash directory of the second software application. The method may comprise executing a first managing application configured to manage a first database, which records states of files stored in the memory according to operations performed by the first software application and the second software application, and includes files associated with a list, which are classified as included in the first trash directory and the second trash directory. The method may comprise executing a second managing application configured to manage a second database, which is updated by using a list that is obtained from the first database. The displaying the first execution screen may comprise, based on receiving the user input for accessing the first trash directory, identifying, by using the second database including information with respect to files classified as included in the first trash directory and the second trash directory, at least one file that is included in the second trash directory and is associated with a category accessible by the first software application. The displaying the first execution screen may comprise displaying, via the first execution screen of the first software application, at least one visual object corresponding to the identified at least one file.

For example, the first database may be managed by the first managing application, which is a mediaprovider software program that is associated with an image, a video, or an audio included in the files in the memory.

For example, the method may comprise, based on execution of the second managing application, obtaining the list of files, which are filtered by an attribute for indicating a file classified into a trash directory, within the second database. The method may comprise performing synchronization of the first database and the second database by comparing the list and the first database.

For example, the second database including records respectively corresponding to files classified into trash directories of a plurality of software applications including the first software application and the second software application may be managed by the second managing application, which is a trash-directory-managing software program.

For example, the first database may include information with respect to files, within a directory managed by the second managing application, included in a sub directory having a package name of another software application different from the first software application.

As described above, according to an embodiment, a non-transitory computer readable storage medium including instructions is provided. The instructions may be configured to, when executed by an electronic device comprising a display, memory and a processor, cause the electronic device to display within the display a first execution screen based on execution of a first software application. The first execution screen may be configured to receive a user input for accessing a first trash directory of the first software application. The instructions, when executed by the electronic device, may cause the electronic device to display a second execution screen based on execution of a second software application. The second execution screen may be configured to receive a user input for accessing a second trash directory of the second software application. The instructions, when executed by the electronic device, may cause the electronic device to execute a first managing application configured to manage a first database, which records states of files stored in the memory according to operations performed by the first software application and the second software application, and includes files associated with a list, which are classified as included in the first trash directory and the second trash directory. The instructions, when executed by the electronic device, may cause the electronic device to execute a second managing application configured to manage a second database, which is updated by using a list that is obtained from the first database. The instructions, when executed by the electronic device, may cause the electronic device to, based on receiving, via the first execution screen, the user input for accessing the first trash directory, identify, by using the second database including information with respect to files classified as included in the first trash directory and the second trash directory, at least one file that is included in the second trash directory and is associated with a category accessible by the first software application. The instructions, when executed by the electronic device, may cause the electronic device to display, via the first execution screen of the first software application, at least one visual object corresponding to the identified at least one file.

The device described above may be implemented with a hardware component, a software component, and/or a combination of the hardware component and the software component. For example, the device and the component described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

Other aspects of the invention are set out in the following numbered paragraphs.
Paragraph 1: An electronic device, comprising:
   a display;
   a processor;
   memory storing instructions that, when executed by the processor, cause the electronic device to:
      display within the display a first execution screen based on execution of a first software application, the first execution screen configured to receive a user input for accessing a first trash directory of the first software application;
      display a second execution screen based on execution of a second software application, the second execution screen configured to receive a user input for accessing a second trash directory of the second software application;
      execute a first managing application configured to manage a first database, which records states of files stored in the memory according to operations performed by the first software application and the second software application, and includes files associated with a list, which are classified as included in the first trash directory and the second trash directory;
      execute a second managing application configured to manage a second database, which is updated by using a list that is obtained from the first database; and
      based on receiving, via the first execution screen, the user input for accessing the first trash directory:
         identify, by using the second database including information with respect to files classified as included in the first trash directory and the second trash directory, at least one file that is included in the second trash directory and is associated with a category accessible by the first software application, and
         display, via the first execution screen of the first software application, at least one visual object corresponding to the identified at least one file.
Paragraph 2. The electronic device of paragraph 1, wherein the processor is configured to, when the instructions are executed, cause the electronic device to:
   based on execution of the second managing application, obtain the list of the files, which are filtered by an attribute for indicating a file classified into a trash directory, within the second database;
   perform synchronization of the first database and the second database by comparing the list of the files and the first database.
Paragraph 3. The electronic device of paragraph 2, wherein the processor is configured to, when the instructions are executed, cause the electronic device to:
   obtain a number of files indicated as classified into a trash directory by the attribute, in each of groups of the files in the memory distinguished by index values of the second database;
   perform the synchronization of the first database and the second database by using the list associated with a group having the number, which is a positive number.
Paragraph 4. The electronic device of paragraph 2, wherein the processor is configured to, when the instructions are executed, cause the electronic device to:
   disassociate, among files associated with the first database, a file that is different from files included in the list from the first database.
Paragraph 5. The electronic device of one of paragraph 1 to paragraph 4, wherein the first database is managed by the first managing application, which is a mediaprovider software program that is associated with an image, a video, or an audio included in the files in the memory.
Paragraph 6. The electronic device of one of paragraph 1 to paragraph 5, wherein the second database including records respectively corresponding to files classified into trash directories of a plurality of software applications including the first software application and the second software application is managed by the second managing application, which is a trash-directory-managing software program.
Paragraph 7. The electronic device of one of paragraph 1 to paragraph 6, wherein the processor is configured to, when the instructions are executed, cause the electronic device to:
   within a directory managed by the second managing application, detect the files to be associated with the first database by accessing a sub directory having a package name of another software application different from the first software application.
Paragraph 8. The electronic device of paragraph 7, wherein the processor is configured to, when the instructions are executed, cause the electronic device to:
   based on identifying a file stored in the sub directory, obtain, from a character string indicating a first path of the identified file, a second path in which the identified file was stored.
Paragraph 9. The electronic device of paragraph 8, wherein the processor is configured to, when the instructions are executed, cause the electronic device to:
   obtain the second path within the character string from a portion before a preset character string.
Paragraph 10. The electronic device of one of paragraph 1 to paragraph 9, wherein the processor is configured to, when the instructions are executed, cause the electronic device to:
   in response to another input to delete a file that is received based on execution of the first software application, execute a content provider based on a uniform resource indicator (URI) indicating deletion of the file corresponding to the another input.
Paragraph 11. A method of an electronic device comprising a display, memory and a processor, comprising:
   displaying within the display a first execution screen based on execution of a first software application, the first execution screen configured to receive a user input for accessing a first trash directory of the first software application;
   displaying a second execution screen based on execution of a second software application, the second execution screen configured to receive a user input for accessing a second trash directory of the second software application;
   executing a first managing application configured to manage a first database, which records states of files stored in the memory according to operations performed by the first software application and the second software application, and includes files associated with a list, which are classified as included in the first trash directory and the second trash directory;
   executing a second managing application configured to manage a second database, which is updated by using a list that is obtained from the first database; and
   wherein the displaying the first execution screen comprises:
      based on receiving the user input for accessing the first trash directory, identifying, by using the second database including information with respect to files classified as included in the first trash directory and the second trash directory, at least one file that is included in the second trash directory and is associated with a category accessible by the first software application, and
      displaying, via the first execution screen of the first software application, at least one visual object corresponding to the identified at least one file.
Paragraph 12. The method of paragraph 11, wherein the first database is managed by the first managing application, which is a mediaprovider software program that is associated with an image, a video, or an audio included in the files in the memory.
Paragraph 13. The method of one of paragraph 11 to paragraph 12, further comprising:
   based on execution of the second managing application, obtaining the list of files, which are filtered by an attribute for indicating a file classified into a trash directory, within the second database;
   performing synchronization of the first database and the second database by comparing the list and the first database.
Paragraph 14. The method of paragraph 13, wherein the performing the synchronization comprises:
   obtaining a number of files indicated as classified into a trash directory by the attribute, in each of groups of the files in the memory distinguished by index values of the second database;
   performing the synchronization of the first database and the second database by using the list of the files associated with a group having the number, which is a positive number.
Paragraph 15. The method of paragraph 13, wherein the performing the synchronization comprises:
   disassociating, among files associated with the first database, a file that is different from files included in the list from the first database.

## Claims

1. An electronic device, comprising:
a display;
a processor; and
a memory storing instructions that, when executed by the processor, cause the electronic device to:
display, on the display, a first execution screen based on an execution of a first software application, the first execution screen configured to receive a first user input for accessing a first trash directory of the first software application;
display a second execution screen based on an execution of a second software application, the second execution screen configured to receive a second user input for accessing a second trash directory of the second software application;
execute a first managing application configured to manage a first database, the first database configured to record one or more states of one or more files stored in the memory, the one or more states of the one or more files based on operations performed by the first software application and the second software application, and wherein the first database includes files associated with a list, wherein the files associated with the list are classified as included in the first trash directory and the second trash directory;
execute a second managing application configured to manage a second database, wherein the second database is updated using the list obtained from the first database; and
based on receiving, via the first execution screen, the user input for accessing the first trash directory:
identify, using the second database including information with respect to files classified as included in the first trash directory and the second trash directory, at least one file that is included in the second trash directory and is associated with a category accessible by the first software application, and
display, via the first execution screen of the first software application, at least one visual object corresponding to the identified at least one file.

2. The electronic device of claim 1, wherein the processor is further configured to:
in response to an execution of the second managing application, obtain the list of the files , wherein each file from the list of files includes an attribute, the attribute indicating whether the file is classified into a trash category, which are filtered by an attribute for indicating a file classified into a trash directory, within the second database;
perform synchronization of the first database and the second database by comparing the list of the files of the second database and the first database.

3. The electronic device of claim 2, wherein the processor is further configured to:
obtain a number of files indicated as classified into a trash directory by the attribute, in each of groups of the files in the memory distinguished by index values of the second database;
perform the synchronization of the first database and the second database by using the list of the files associated with a group having the number, which is a positive number.

4. The electronic device of claim 2 or claim 3, wherein the processor is further configured to:
disassociate, among files associated with the first database, a file that is not included in the list from the first database.

5. The electronic device of one of claim 1 to claim 4, wherein the first database is managed by the first managing application, wherein the first managing application is a media provider software program associated with an image file, a video file, or an audio file included in the memory.

6. The electronic device of one of claim 1 to claim 5, wherein the second database is managed by the second managing application, wherein the second managing application is a trash-directory-managing software program, and wherein the second database includes records corresponding to files classified into trash directories of a plurality of software applications including the first software application and the second software application.

7. The electronic device of one of claim 1 to claim 6, wherein the processor is further configured to:
detect, within a directory managed by the second managing application, the files to be associated with the first database by accessing a sub directory having a package name of a second software application different from the first software application.

8. The electronic device of claim 7, wherein the processor is further configured to:
in response to identifying a file stored in the sub directory, obtain, from a character string indicating a first path of the identified file, a second path in which the identified file was stored.

9. The electronic device of claim 8, wherein the processor is further configured to:
obtain the second path within the character string from a portion of the character string before a preset portion of the character string.

10. The electronic device of any one of claim 1 to claim 9, wherein the processor is further configured to:
in response to detecting a second input on a screen of the first software application, the second input indicative of an intention by a user to delete a file of the first software application, execute a content provider in response to a uniform resource indicator (URI) indicating deletion of the file corresponding to the second input.

11. A method of operating an electronic device comprising a display, a memory and a processor, the method comprising:
displaying within the display a first execution screen based on execution of a first software application, the first execution screen configured to receive a user input for accessing a first trash directory of the first software application;
displaying a second execution screen based on execution of a second software application, the second execution screen configured to receive a user input for accessing a second trash directory of the second software application;
executing a first managing application configured to manage a first database, which records states of files stored in the memory according to operations performed by the first software application and the second software application, and includes files associated with a list, which are classified as included in the first trash directory and the second trash directory;
executing a second managing application configured to manage a second database, which is updated by using a list that is obtained from the first database; and
wherein the displaying the first execution screen comprises:
based on receiving the user input for accessing the first trash directory, identifying, by using the second database including information with respect to files classified as included in the first trash directory and the second trash directory, at least one file that is included in the second trash directory and is associated with a category accessible by the first software application, and
displaying, via the first execution screen of the first software application, at least one visual object corresponding to the identified at least one file.

12. The method of claim 11, wherein the first database is managed by the first managing application, wherein the first managing application is a media provider software program associated with an image file, a video file, or an audio file included in the files in the memory.

13. The method of claim 11 or claim 12, further comprising:
during an execution of the second managing application, obtaining the list of files, which are filtered by an attribute for indicating a file classified into a trash directory, within the second database;
performing synchronization of the first database and the second database by comparing the list with the first database.

14. The method of claim 13, wherein performing the synchronization comprises:
obtaining a number of files indicated, by the attribute, as classified into a trash directory, in each of groups of the files in the memory distinguished by index values of the second database;
performing the synchronization of the first database and the second database by using the list of the files associated with a group having the number, which is a positive number.

15. The method of claim 13, wherein performing the synchronization comprises:
disassociating, from a plurality of files associated with the first database, a file that is different from the files included in the list from the first database.
